# EUROPÄISCHE PATENTSCHRIFT

(11) **EP 2 776 535 B1**
(45) Veröffentlichungstag und Bekanntmachung des Hinweises auf die Patenterteilung: **13.03.2019**
(21) Anmeldenummer: 12791444.8
(22) Anmeldetag: 29.10.2012
(51) Int. Cl.: C09K 21/06, C09D 5/18, C09K 3/10

(54) **WÄSSRIGE LÖSUNG**
AQUEOUS SOLUTION
SOLUTION AQUEUSE

(30) Priorität: 09.11.2011 DE 102011055188
(43) Veröffentlichungstag der Anmeldung: 17.09.2014
(73) Patentinhaber: Fritz-Kramer, Dagmar, 87746 Erkheim (DE); Fritz, Volker, 87746 Erkheim (DE)
(72) Erfinder: BOLDIZSAR, Zoltan, 88316 Isny (DE)
(74) Vertreter: Pfister, Stefan Helmut Ulrich
(86) Internationale Anmeldenummer: PCT/EP2012/071359
(87) Internationale Veröffentlichungsnummer: WO 2013/068260

(56) Entgegenhaltungen:
- EP-A1- 2 236 578
- DE-C- 162 043
- DE-U1- 29 506 761
- GB-A- 362 955
- GB-A- 455 533
- RU-C2- 2 237 631

## Beschreibung

Die Erfindung betrifft eine wässrige Lösung.

Beim Bauen mit Holz und hierbei insbesondere im Holzfertigbau spielt die Brennbarkeit der verwendeten Bau- und Dämmstoffe beziehungsweise die Herabsetzung der Brennbarkeit eine wesentliche Rolle. Nur wenn die verwendeten Baustoffe die Anforderungen entsprechender Normen erfüllen, besteht die Möglichkeit, diese als Baustoffe beziehungsweise Bauelemente zu verwenden. Aufgrund dessen, dass bei derartigen Bauten auch auf Holz beziehungsweise auf Zellulosefasern basierende Dämmungen Verwendung finden, kommt eine weitere große Rolle der Minderung der Brennbarkeit dieser Dämmstoffe zu.

Bekannte Lösungen versuchen durch Beigabe von Wasserglas beziehungsweise von Molke die Brennbarkeit der Bau- und Dämmstoffe herabzusetzen. Nachteilig hierbei ist, dass zum einen nicht sichergestellt werden kann, dass eine ausreichende Benetzung beziehungsweise Imprägnierung der Baustoffe beziehungsweise Dämmstoffe mit dem brandhemmenden Mittel erfolgt, zum anderen ergibt sich der Fall, dass sich über einen längeren Zeitraum gesehen, die aufgebrachten Stoffe, die zum Teil nur an der Oberfläche der Materialien haften, von diesem Lösen und somit die brandhemmende Wirkung verloren geht.

Des Weiteren nachteilig an bekannten Mitteln zur Senkung der Brennbarkeit ist, dass diese ab einer bestimmten Konzentration klebende Wirkung entfalten. Wird Dämmmaterial, das in der Regel in Flocken- oder Pulverform zumindest jedoch als Fasern oder dergleichen vorliegt, mit einem der bekannten Mittel behandelt, so kann es zu Verklumpungen kommen, die sich nachteilig auf die Verteilung des Dämmmaterials in der Dämmschicht auswirken. Darüberhinaus ergeben sich aus den verklumpten Dämmmaterialien Nachteile bei der Verarbeitbarkeit der jeweiligen Stoffe sowie ein unregelmäßiges Abbrandverhalten.

Das Dokument GB 455 533 A offenbart eine Mischung, mit welcher Holz und andere Werkstoffe flammhemmend und/oder wasserabweisend ausgerüstet werden können. Die Mischung enthält u.a. Latex, Wasserglas, in Celluloseester gelöster Kampfer, Ammoniak, warme Milch, kalte Milch und getrocknete Milch.

Das Dokument EP 2 236 578 A1 offenbart einen Holzkleber aus Wasser, Proteinrohmaterial, Säureregulator, aromatischer Substanz und weiteren Bestandteilen.

Das Dokument RU 2 237 631 C2 offenbart eine Zusammensetzung mit Wasserglas, Aluminiumsilikatkomponenten und alkalischen Komponenten. Die Zusammensetzung kann insbesondere als Kleber verwendet werden.

Das Dokument DE 162 043 offenbart ein Imprägnierungsmittel zum flammhemmenden Ausrüsten von Holz, wobei das Imprägnierungsmittel eine Lösung mit Natronsilikat, Kochsalzlösung und Ätznatronlösung ist.

Das Dokument DE 295 06 761 U1 offenbart ein Dämmelement aus Pflanzenfasern mit einem Flies mit dreidimensionaler Wirrstruktur, welches mit einem Bindemittel getränkt werden kann.

Aufgabe der vorliegenden Erfindung ist es, eine wässrige Lösung zur Verfügung zu stellen, die die Nachteile des Standes der Technik überwindet und den Brandschutz von Bau- und Dämmstoffen verbessert.

Zur Lösung dieser Aufgabe wird eine wässrige Lösung gemäß Anspruch 1 vorgeschlagen. Die wässrige Lösung bleibt nicht auf die Verwendung nur eines einzigen Modifizierungsmittels beschränkt. Ferner können hier Modifizierungsmittel mit gleicher Funktion beziehungsweise gleicher chemischer Grundstruktur nebeneinander verwendet werden. Des Weiteren besteht die Möglichkeit, dass unterschiedliche Modifizierungsmittel je nach Verwendungs- und Einsatzzweck der wässrigen Lösung dieser in Kombination beigegeben werden.

Als vorteilhaft erweist es sich, wenn wenigstens eines der weiteren in der wässrigen Lösung verwendeten Modifizierungsmittel aus der Gruppe ausgewählt ist, die aus Sacchariden, insbesondere Mono-, Di-, Tri- oder Polysacchariden, bevorzugt Saccharose, Laktose, Laktulose, Maltose oder Trehalose; Alditolen; Carbonsäuren sowie deren Salze und Ester; Polyhydroxycarbonsäuren sowie deren Salze und Ester und hierbei insbesondere Zuckersäure, Zuckerester oder Kombinationen daraus, besteht.

Zur Gruppe der Sacchariden gehören vor allem Zucker und Stärken. Die Stoffgruppe kann somit mehrere Funktionen in der vorgeschlagenen wässrigen Lösung übernehmen. Zum einen bilden die in der wässrigen Lösung eingebrachten Saccharide im Brandfall eine isolierende Kohleschutzschicht auf den imprägnierten Baubeziehungsweise Dämmstoffen. Zum anderen sind die Stoffe in der Lage, Wasser zu binden und über einen längeren Zeitraum abzugeben. Das gespeicherte Wasser kann eine zu schnelle Aushärtung beziehungsweise Abbindung der auf die Dämm- beziehungsweise Baustoffe aufgebrachten wässrigen Lösung verhindern und damit die offene Zeit für die Imprägnierung verlängern, wodurch das Imprägnierungsergebnis insgesamt verbessert wird.

Ein oder mehrere weitere Modifizierungsmittel, die zusätzlich der wässrigen Lösung beigegeben werden können, sind bevorzugt ausgewählt aus der Gruppe bestehen aus: grenzflächenaktiven Substanzen, insbesondere natürlichen und/oder synthetischen Tensiden, bevorzugt anionischen oder kationischen oder amphoteren Tensiden, Zuckertensiden oder aber aus Alkylpolyglycosiden, Seifen oder EMulgatoren. Es wird als besonders günstig angesehen, wenn die Saponine aus Sapindus mukorossi oder Quillaja saponaria gewonnen sind. Selbstverständlich besteht auch die Möglichkeit eine oder mehrere der vorgenannten Substanzen mit den Saponinen zu kombinieren und diese Kombination als Modifizierungsmittel in der wässrigen Lösung einzusetzen.

Grenzflächenaktive Substanzen, wie die vorgenannten, setzen die Oberflächenspannung beziehungsweise die Grenzflächenspannung zwischen zwei Phasen herab. Hierdurch wird zum Einen die Durchmischung der einzelnen Bestandteile der wässrigen Lösung verbessert, zum anderen erfolgt eine wesentlich bessere Oberflächenbenetzung der mit der wässrigen Lösung behandelten Baubeziehungsweise Dämmstoffe. Das Imprägnierungsergebnis wird somit wesentlich verbessert. Die entsprechend modifizierte wässrige Lösung ist auch in der Lage in interzellulare Zwischenräume einzudringen. Die Imprägnierung der einzelnen Baustoffe beziehungsweise Dämmstoffe wird so weiter verbessert und das Abbrandverhalten weiter modifiziert. Es wird nicht nur eine oberflächliche Schicht aus Brandschutzmittel auf den Baubeziehungsweise Dämmstoffen gebildet, sondern die den Brandschutz bewirkende Lösung dringt tief in das behandelte Material ein und benetzt beziehungsweise beschichtet dort Oberflächen entsprechend. Ebenfalls eine entscheidende Funktion kommt den letztgenannten Modifizierungsmitteln unter anderem auch bei der Einstellung des pH-Wertes der verwendeten wässrigen Lösung zu. Hierdurch kann eine Alkalität der wässrigen Lösung eingestellt werden, die so zusätzlich einen fungiziden Charakter aufweist. Auch wird Insektenfraß minimiert und eine Schädigung des Bauwerks beziehungsweise der Dämmstoffschicht verhindert.

Dem Saponin kommt neben der grenzflächenaktiven Eigenschaft auch eine weitere Schutzfunktion bezüglich Insekten oder Pilzbefall zu.

Eine weitere als vorteilhaft angesehene Ausführungsform der wässrigen Lösung sieht vor, dass diese als Modifizierungsmittel zusätzlich zu den bereits genannten ein Modifizierungsmittel enthält, das ausgewählt ist aus der Gruppe bestehend aus: Bindemitteln, insbesondere Zellulose, natürlichem oder synthetischem Wachs, bevorzugt Pflanzenwachs, Erdwachs, Stearin oder Paraffin, natürlichem oder synthetischem Harz, natürlichem oder synthetischem Öl, chemisch modifziertem, insbesondere verseiftem oder in Wasser emulgiertem, natürlichem oder synthetischem Wachs, chemisch modifiziertem, insbesondere verseiftem oder in Wasser emulgiertem, natürlichem oder synthetischem Harz, beziehungsweise chemisch modifiziertem, insbesondere verseiftem oder in Wasser emulgiertem, natürlichem oder synthetischem Öl oder Kombinationen. Über derartige Bindemittel können letztendlich Viskosität und Hafteigenschaften der wässrigen Lösung eingestellt werden.

Zusätzlich besteht auch die Möglichkeit, dass das zusätzliche Modifizierungsmittel ausgewählt ist aus Bier, Kasein, Verdickungsmitteln, wie insbesondere Talkum, Kreide, Sägemehl, Sand, hierbei bevorzugt Fein- oder Quarzsand, Pigmenten, natürlichem oder synthetischem Rodentizid, Insektizid oder Fungizid oder Kombinationen daraus sowie in Kombinationen mit den vorgenannten.

Durch die Beigabe eines oder mehrerer weiterer abgestimmter Modifizierungsmittel(s) wird das Verwendungsspektrum der wässrigen Lösung definiert. Bei Verwendungen, in denen eine Beschichtung von Oberflächen im Vordergrund steht, wird es als günstig angesehen, einen höheren Bindemittelanteil beizugeben. Es besteht darüberhinaus die Möglichkeit, dass aus der wässrigen Lösung ein Anstrich oder eine Verguss- beziehungsweise Dichtmasse gebildet wird. In dieser Verwendungsform wird besonderer Wert auf eine höhere Viskosität der wässrigen Lösung und ein klar definiertes Abbindeverhalten gelegt. Eine derartige Verwendung wird dann als Modifizierungsmittel bevorzugt einen höheren Binde- beziehungsweise Verdickungsmittelanteil aufweisen als beispielsweise Imprägnierlösungen, die für ein Besprühen oder Vernebeln vorgesehen sind und in die Struktur des behandelten Materials eindringen.

Werden dem Modifizierungsmittel Pigmente beigemischt, so kann eine Farbgebung des behandelten Materials über die wässrige Lösung erfolgen. Die Verwendung zusätzlicher Rodentizide, Insektizide oder Fungizide beziehungsweise Kombinationen aus diesen, erhöht die Schädlingsresistenz der behandelten Materialien.

Die erfindungsgemäße wässrige Lösung sieht die Verwendung von Molke vor. Als besonders vorteilhaft erweist es sich in diesem Zusammenhang, wenn die Molke ausgewählt ist aus der Gruppe bestehend aus: Süssmolke und Sauermolke. Gleichfalls von der Erfindung umfasst ist die Möglichkeit, dass Kombinationen aus den beiden bekannten Molkearten Verwendung finden. Die in der wässrigen Lösung vorliegenden Molkebestandteile bilden im Brandfalle ebenfalls eine isolierende Kohleschutzschicht und spalten unbrennbare Gase ab. Es entwickelt sich eine Schutzgasatmosphäre, die die Sauerstoffzufuhr zum brennbaren Baubeziehungsweise Dämmstoff behindert und damit eine Verzögerung des Abbrandes bewirkt. Die vorgenannten Molkearten unterscheiden sich vor allem in ihrem Gehalt an Fett und Laktose. Der Fettgehalt der Sauermolke ist niedriger als der der Süssmolke, während der Laktosegehalt in der Sauermolke signifikant höher ist als in der Süssmolke. Im Zusammenhang mit der Verwendung zusätzlicher Saccharide, wie beispielsweise Zuckern, wird somit die Brandschutzwirkung durch die Hinzunahme von Molke zur erfindungsgemäßen wässrigen Lösung weiter verbessert.

Ein weiterer Bestandteil der erfindungsgemäßen wässrigen Lösung ist Wasserglas. Dieses ist bevorzugt ausgewählt aus der Gruppe bestehend aus: Natriumwasserglas und Kaliumwasserglas. Selbstverständlich besteht auch hier die Möglichkeit, dass Kombinationen von Natrium- und Kaliumwasserglas Verwendung finden. Neben der Funktion als Bindemittel übernimmt das Wasserglas eine wesentliche Funktion als Flammschutzmittel. Durch eine Behandlung mit Wasserglas kann das Abbrandverhalten von mit der wässrigen Lösung gemäß der Erfindung behandelten Bau- und Dämmstoffen sowie daraus gebildeten Bauwerken wesentlich herabgesetzt werden. Im Allgemeinen kann jegliche Art Wasserglas in der wässrigen Lösung gemäß der Erfindung verwendet werden, als bevorzugt und besonders günstig erweist es sich, wenn das Wasserglas Natriumwasserglas, insbesondere Natriumwasserglas 37/40 Bé ist.

Eine bevorzugte Ausführungsform der wässrigen Lösung sieht vor, dass diese folgende Zusammensetzung aufweist: Die bevorzugte wässrige Lösung enthält zwischen 0,5 und 10 Vol-%, insbesondere zwischen 0,75 und 5 Vol-%, bevorzugt zwischen 0,95 und 1,25 Vol-% wenigstens eines Saccharids, insbesondere Laktose. Des Weiteren enthält die wässrige Lösung zwischen 0,1 und 5 Vol-%, insbesondere zwischen 0,25 und 3 Vol-%, bevorzugt zwischen 0,5 und 1 Vol-% wenigstens einer Molke beziehungsweise Molkenart, bevorzugt Sauermolke.

Die wässrige Lösung enthält ferner Saponin. Der Vol-%-Anteil liegt zwischen 0,001 und 0,5 Vol-%, insbesondere zwischen 0,001 und 0,1 Vol-%, bevorzugt zwischen 0,002 und 0,05 Vol-%. Die wässrige Lösung enthält ferner zwischen 10 und 85 Vol-%, insbesondere zwischen 45 und 75 Vol-%, bevorzugt zwischen 50 und 70 Vol-% wenigstens eines Wasserglases, bevorzugt Natriumwasserglas.

Je nach Verwendungszweck der wässrigen Lösung beziehungsweise abhängig von der Art des zu behandelnden Dämm- beziehungsweise Baustoffes, kann die wässrige Lösung, wie zuvor beschrieben, bevorzugt 0 bis 50 Vol-% wenigstens eines weiteren Modifizierungsmittels, wie zuvor beschrieben, aufweisen. Als weiteres Modifizierungsmittel kommen dabei insbesondere Bindemittel, Verdickungsmittel, Bier, Kasein sowie Pigmente oder Schädlingsbekämpfungs- beziehungsweise Schädlingsbefallsverhinderungsmittel in Frage.

Wie zuvor ausgeführt, enthält die wässrige Lösung zwischen 0 und 0,5 Vol-%, insbesondere zwischen 0,001 und 0,1 Vol-%, bevorzugt zwischen 0,02 und 0,05 Vol-% wenigstens einer weiteren grenzflächenaktiven Substanz. Die grenzflächenaktive Substanz kann hierbei als Verdünnung aus einer Stammlösung mit Wasser zur Verfügung gestellt werden. Alternativ zur Verdünnung mit Wasser besteht selbstverständlich die Möglichkeit, hier ein anderes, geeignet erscheinendes Lösungsmittel zu verwenden. Die Verdünnung der Stammlösung mit Wasser beziehungsweise dem Lösungsmittel erfolgt im Verhältnis von zwischen 1:2000 und 1:100, insbesondere von zwischen 1:1500 und 1:200, bevorzugt von zwischen 1:1000 und 1:300. Die Grenzflächenaktivität der entsprechenden Substanzen ist auch bei niedrigen Verdünnungen noch gegeben. Eine ausreichende Benetzung sämtlicher Oberflächen des zu behandelnden Materials, das heißt des Baustoffes beziehungsweise Dämmstoffes ist somit sichergestellt. Über die Auswahl einer geeigneten Verdünnung kann auch die Schäumungsneigung der wässrigen Lösung kontrolliert und eingestellt werden.

Die Erfindung umfasst des Weiteren die Verwendung der wässrigen Lösung wie zuvor beschrieben als brandhemmendes Imprägnier- oder Beschichtungsmittel. Imprägniert bzw. beschichtet wird hierbei insbesondere ein auf Lignozellulose basierender Baustoff.

Aufgrund der wässrigen Konsistenz der Lösung eignet sich diese besonders gut dafür, Baustoffe wie beispielsweise Vollholz, aber auch Dämmstoffe und Dämmplatten, die gleichermaßen unter den Begriff "Baustoffe" fallen zu imprägnieren, beispielsweise durch Druckimprägnierung. Die grenzflächenaktive(n) Substanz(en), die der wässrigen Lösung bevorzugt als Modifizierungsmittel beigemischt wird/werden, bewirkt/en dabei eine gute Benetzung des Baustoffes sowie der inneren Baustoffstruktur. Durch die Herabsetzung der Oberflächenspannung der wässrigen Lösung kann diese tief in die Holzstruktur bzw. die Zellstruktur des Vollholzes eindringen und hier eine umfassende Imprägnierung der äußeren und inneren Oberfläche des Baustoffes sicherstellen. Außerdem können auch Naturfaserplatten mit der wässrigen Lösung imprägniert bzw. beschichtet werden. Bei derartigen Naturfaserplatten handelt es sich insbesondere um Platten aus gepressten Holzfasern, Flachsfasern, Getreidefasern, Kokosfasern, Sisalfasern, Schilffasern, Hanffasern, Palmfasern sowie Platten, die aus Mischungen der vorgenannten Fasern hergestellt wurden. Auch hier erweist sich die Verwendung der wässrigen Lösung als vorteilhaft, da eine umfassende und tief in die Struktur der Einzelfasern eindringende Imprägnierung bzw. Beschichtung der Faserbestandteile beziehungsweise deren Umhüllung mit den brandhemmenden Substanzen möglich ist.

Des Weiteren besteht selbstverständlich auch die Möglichkeit, dass neben einer Imprägnierung bzw. Durchdringung der Einzelfasern eine Beschichtung bzw. Durchdringung der fertigen Naturfaserplatte mit der wässrigen Lösung erfolgt, so dass hier die Abbrandneigung der Naturfaserplatte, ebenso wie beim zuvor genannten Vollholz, wesentlich herabgesetzt wird. Durch die erfindungsgemäße wässrige Lösung wird, neben der verbesserten Beschichtung bzw. Imprägnierleistung auch eine dauerhafte Imprägnierung geschaffen, die nicht nur an der Oberfläche des Baustoffes verbleibt, sondern auch in dessen Struktur eingedrungen ist. Neben der bereits genannten eignet sich die wässrige Lösung selbstverständlich auch für die Verwendung als brandhemmendes Imprägnier- oder Beschichtungsmittel von aus Wolle gebildeten Platten. Daneben kann eine Verwendung mit Holzwolleplatten ebenso durchgeführt werden, wie eine Imprägnierung bzw. Beschichtung von Schichtholz, Leimholz, MDF, HDF, OSB, Spanplatten, Sperrholz und Furniersperrholz oder daraus gebildeten Bauwerken. Auch hier erfolgt nicht nur eine oberflächliche Beschichtung der genannten Baustoffe, sondern eine Tiefenimprägnierung der inneren Strukturen der jeweiligen Baustoffe bzw. Baustoffbestandteile. Die Imprägnierung kam in sämtlichen dem Fachmann bekannten Verfahren, beispielsweise durch Druckimprägnierung, erfolgen.

Eine weitere Verwendung der wässrigen Lösung ist dahingehend vorgesehen, alsdass diese als brandhemmendes Imprägnier- oder Beschichtungsmittel für ein Dämmstoffmaterial verwendet wird. Bei derartigen Dämmstoffmaterialien handelt es sich in der Regel um lose in Zwischen- oder Hohlräume der zu dämmenden Baukörpern einbringbare, insbesondere einblasbare Stoffe. Das für die Verwendung mit der wässrigen Lösung als brandhemmendes Imprägnier- oder Beschichtungsmittel vorgesehene Dämmstoffmaterial ist hierbei insbesondere als auf Lignozellulose basierendes Dämmstoffmaterial ausgebildet, wobei die Erfindung hierauf jedoch nicht beschränkt ist, sondern sämtliche Dämmmaterialien, beispielsweise auch auf Stein oder Kunststoff basierende umfasst. Derartiges Dämmstoffmaterial wird beispielsweise aus Holz hergestellt. Vorgesehen ist die Verwendung der wässrigen Lösung mit Holzspänen oder Holzfasern. Diese werden mit der wässrigen Lösung benetzt und imprägnieren die Dämmstoffmaterialien dabei. Auch hier verbleibt die Imprägnierung bzw. Beschichtung nicht nur auf der Dämmstoffoberfläche, sondern dringt tief in die Struktur der Dämmstoffe ein. Holzspäne oder Holzfasern werden beispielsweise mit der wässrigen Lösung getränkt oder besprüht und beschichten bzw. benetzen dabei auch die inneren Oberflächen der Späne bzw. Fasern. Insbesondere werden hier in den Zellzwischenräumen die Substanzen der wässrigen Lösung eingelagert bzw. als Schicht aufgebracht. Hierdurch wird die Abbrandgeschwindigkeit wesentlich reduziert und die Abbrandneigung verringert. Neben den vorgenannten Dämmstoffmaterialien, die auf Holz, Holzspänen oder Holzfasern basieren besteht selbstverständlich auch die Möglichkeit, dass die wässrige Lösung als brandhemmendes Imprägnier- oder Beschichtungsmittel mit weiteren Dämmstoffmaterialien verwendet wird. Hierzu können diese beispielsweise ausgewählt werden aus der Gruppe bestehend aus Flachsfasern, Getreidefasern, Kokosfasern, Sisalfasern, Schilffasern, Hanffasern, Palmfasern oder Mischungen aus den vorgenannten Faserarten sowie der genannten Faserart mit Holz, Holzspänen oder Holzfasern. Als weiteres mögliches Dämmstoffmaterial eignet sich Gras, Getreide oder Zellulose sowie Zellulosefasern und Altpapier sowie deren Kombination mit den vorgenannten Materialien. Auch diese können mit dem brandhemmenden Imprägnier- oder Beschichtungsmittel, das auf der wässrigen Lösung basiert, imprägniert oder getränkt werden, so dass sich hier ein optimaler Brandschutz ergibt. Neben den vorgenannten pflanzlichen Dämmstoffmaterialien kann die wässrige Lösung selbstverständlich auch als brandhemmendes Imprägnier- oder Beschichtungsmittel für tierische oder synthetische Dämmstoffmaterialien, insbesondere Wolle, Verwendung finden. Auch denkbar ist eine Verwendung mit einer Kombination verschiedener Dämmstoffmaterialien.

Um eine zufriedenstellende Benetzung, Imprägnierung und Durchdringung der Dämmstoffmaterialien bzw. Baustoffe mit der wässrigen Lösung zu gewährleisten, ist erfindungsgemäß vorgesehen, dass die wässrige Lösung als versprüh- oder vernebelbare Lösung vorliegt. Durch geeignete Auswahl der Inhaltsstoffe bzw. der in der wässrigen Lösung zusammengeführten Substanzen kann diese Eigenschaft der Lösung herbeigeführt werden. Insbesondere bei der Behandlung von Dämmstoffmaterialien erweist es sich als vorteilhaft, wenn die wässrige Lösung auf die beispielsweise in einer Mischkammer oder einem Mischtrog eingebrachten Materialien aufgesprüht wird. Selbstverständlich besteht auch die Möglichkeit, dass die wässrige Lösung in einer Kammer vernebelt wird, in der die Dämmstoffmaterialien umgewälzt werden. In jedem Fall garantiert die erfindungsgemäße wässrige Lösung eine umfassende Imprägnierung und Beschichtung des Dämmstoffmaterials, so dass die hervorragenden Brandschutzeigenschaften der wässrigen Lösung voll genutzt werden können und die Abbrandneigung der Dämmstoffmaterialien gegenüber unbehandelten Dämmstoffmaterialien wesentlich herabgesetzt und das Abbrand- beziehungsweise Selbstverlöschungsverhalten verbessert wird. Vorteil der Verwendung der erfindungsgemäßen wässrigen Lösung ist des Weiteren, dass aufgrund der Durchdringung und strukturtiefen Imprägnierung nicht die Gefahr besteht, dass es zu einem Abplatzen oder Abspringen der Beschichtungsmaterialien beispielsweise im verbauten Zustand oder bei Temperaturschwankungen und damit einhergehenden Volumenänderungen der behandelten Materialien von der Oberfläche der imprägnierten Stoffe kommt und das Dämmstoffmaterial somit den Brandschutz verliert.

Wird die wässrige Lösung als versprüh- oder vernebelbare Lösung zur Verfügung gestellt, so haben die in der versprühten oder vernebelten Lösung vorhandenen Tröpfchen bevorzugt einen mittleren Durchmesser von zwischen 10*µ*m und 50*µ*m, insbesondere von zwischen 20 *µ*m und 45 *µ*m, bevorzugt von zwischen 20 *µ*m und 40 *µ*m. Entsprechende Tröpfchengrößen lassen sich durch geeignete Auswahl der grenzflächenaktiven Substanz(en) in der wässrigen Lösung sowie geeignete Vol-% Anteile des Wasserglases einstellen.

Als vorteilhaft wird angesehen, wenn der Wasserglasanteil in der wässrigen Lösung, wenn diese für die Verwendung als brandhemmendes Imprägnier- oder Beschichtungsmittel für ein Dämmstoffmaterial vorgesehen ist, bei zwischen 10 Vol-% und 70 Vol-%, bevorzugt bei zwischen 30 Vol-% und 67 Vol-% liegt. Hieraus ergibt sich ein besonders vorteilhafter Wasserglasanteil, der zum einen die Brandschutzleistung der erfindungsgemäßen wässrigen Lösung gewährleistet, zum anderen deren Versprüh- bzw. Vernebelbarkeit nicht nachteilig beeinflusst. Ebenfalls als vorteilhaft angesehen wird, wenn die wässrige Lösung bei Raumtemperatur eine Viskosität von zwischen 1 mPa·s aufweist.

Die Erfindung umfasst auch die Verwendung der wässrigen Lösung wie zuvor ausgeführt als brandhemmende, streichfähige Auftragslösung für einen Baustoff. In der genannten Verwendung weist die wässrige Lösung einen höheren Anteil wenigstens eines Binde- oder Verdickungsmittels auf, das als weiteres Modifizierungsmittel der Grundrezeptur beigegeben wird. Es ergibt sich dann eine - im Gegensatz zur zuvor beschriebenen Imprägnierlösung - viskosere Auftragslösung, die als Anstrich bzw. als Imprägnieranstrich verwendet wird. Der mit der streichfähigen Auftragslösung behandelbare Baustoff ist dabei insbesondere Vollholz. Im Gegensatz zu einer reinen Imprägnierlösung kommt hier bei der weiteren Verwendung der wässrigen Lösung auch eine Oberflächenbeschichtungs- bzw. Versiegelungsfunktion zu. Das heißt, die wässrige Lösung dringt in den Baustoff ein, imprägniert diesen, ein Anteil verbleibt jedoch an der Oberfläche und schafft hier eine Oberflächenbeschichtung oder -versiegelung. Neben dem bereits genannten Baustoff Vollholz besteht selbstverständlich auch die Möglichkeit, dass die wässrige Lösung, in ihrer Verwendung als brandhemmende, streichfähige Auftragslösung auf Naturfaserplatten aufgetragen wird. Derartige Naturfaserplatten können beispielsweise aus gepressten Holzfasern, Flachsfasern, Getreidefasern, Kokosfasern, Sisalfasern, Schilffasern, Hanffasern, Palmfasern oder Fasermischungen gebildet werden. Daneben besteht die Möglichkeit, derartige Naturfaserplatten aus Wolle oder mit einer Wollbeimischung herzustellen. Auch eignet sich die wässrige Lösung als brandhemmende, streichfähige Auftragslösung auf Holzwolleplatten, Schichtholz, Leimholz, MDF, HDF, OSB, Spanplatten, Sperrholz oder Furniersperrholz sowie aus den vorgenannten gebildeten Bauwerken. Aufgrund der erfindungsgemäßen Zusammensetzung ist die streichfähige Auftragslösung in der Lage, neben einer Versiegelung beziehungsweise Beschichtung der Oberfläche in die Struktur der Baustoffe einzudringen und hier die inneren Strukturen der Baustoffe mit der brandhemmenden Imprägnierung zu versehen.

Um die streichfähige, brandhemmende Auftragslösung aus der erfindungsgemäßen wässrigen Lösung herzustellen, ist das wenigstens eine weitere in der wässrigen Lösung verwendbares Modifizierungsmittel bevorzugt ausgewählt aus der Gruppe bestehend aus: Bindemitteln, Verdickungsmitteln, Talkum, Kreide, Sägemehl oder Sand und hierbei insbesondere bevorzugt Fein- oder Quarzsand. Als Bindemittel eignet sich insbesondere auch Zellulose, die pulver- oder faserförmig der wässrigen Lösung beigegeben wird. Daneben besteht die Möglichkeit, dass als Modifizierungsmittel natürliches oder synthetisches Wachs, bevorzugt Pflanzenwachs, Erdwachs, Stearin oder Paraffin Verwendung findet. Natürliches oder synthetisches Harz kann ebenfalls als Binde- beziehungsweise Modifizierungsmittel verwendet werden und die Streichfähigkeit der Auftragslösung weiter verbessern. Auch beigefügt werden kann alternativ oder zusätzlich natürliches oder synthetisches Öl. Selbstverständlich besteht auch die Möglichkeit, dass die zuvor genannten Wachse, Harze oder Öle chemisch modifiziert, insbesondere verseift Verwendung finden. Des Weiteren besteht die Möglichkeit, dass die vorgenannten Wachse, Öle oder Harze in Wasser oder einem Lösungsmittel emulgiert vorliegen und eine derartige Emulsion als Modifizierungsmittel der wässrigen Lösung beigegeben wird. Die Qualität der streichfähigen Auftragslösung sowie deren Haltbarkeit an der Oberfläche der genannten Baustoffe wird auch dadurch verbessert, dass der wässrigen Lösung Bier und/oder Kasein beigegeben wird. Hierdurch kann die Haftung des Anstriches günstig beeinflusst und verbessert werden.

Der Anteil der genannten Modifizierungsmittel an der wässrigen Lösung liegt insbesondere bei zwischen 0 und 50 Vol-%, bevorzugt bei zwischen 5 und 45, bei zwischen 10 und 40, bei zwischen 15 und 35 und/oder bei zwischen 20 und 30 Vol-%. Der Anteil ist abhängig von dem angestrebten Streichergebnis beziehungsweise den verwendeten Modifizierungsmitteln sowie der einzustellenden Viskosität der wässrigen Lösung.
Auch in der letztgenannten Verwendung besteht die Möglichkeit, dass die wässrige Lösung einen Anteil einer grenzflächenaktiven Substanz aus Modifizierungsmittel aufweist. Der Anteil des Saponins liegt dabei insbesondere bei zwischen 0,001 und 0,5 Vol-%, bevorzugt bei zwischen 0,001 und 0,01 Vol-%. Um eine streichfähige Auftragslösung zur Verfügung zu stellen, wird es als vorteilhaft angesehen, wenn die wässrige Lösung bei Raumtemperatur eine Viskosität von zwischen 10 und 10¹⁴mPa·S, insbesondere zwischen 3 und 10¹⁰, bevorzugt zwischen 4 und 10¹²mPa·S aufweist.

Entscheidend für die Qualität und die Ausprägung des Auftrags ist auch die Auswahl des verwendeten Lösungsmittels. Wird hier ein hochflüchtiges Lösungsmittel verwendet, so härtet der Anstrich zügiger aus, als bei der Verwendung von Wasser. Es kann somit über die Auswahl des Lösungsmittels die Imprägnier- und Beschichtungsleistung der wässrigen Lösung in Verwendung als brandhemmende streichfähige Auftragslösung beeinflusst und die offene Verarbeitungszeit eingestellt beziehungsweise auf den jeweiligen Baustoff abgestimmt werden.

Eine weitere Verwendung der erfindungsgemäßen wässrigen Lösung sieht vor, dass diese als brandhemmendes Klebe- oder Bindemittel für einen aus gepressten Lignocellulosefasern, tierischen und/oder synthetischen Fasern, insbesondere Wolle, bildbaren Baustoff Verwendung findet. Die Lignocellulosefasern beziehungsweise tierischen Fasern werden hierfür im Vorfeld mit der wässrigen Lösung vermengt beziehungsweise beschichtet oder imprägniert und danach in plattenförmigen Baustoffform verpresst oder aber nach der Verpressung mit der wässrigen Lösung behandelt. Die Verwendung bleibt nicht auf die Bildung von plattenförmigen Baustoffen beschränkt, selbstverständlich besteht die Möglichkeit, aus den genannten Fasern auch balkenförmige oder sonstige Geometrien aufweisende Baustoffe herzustellen.

Die in der vorgenannten Verwendung der wässrigen Lösung verwendbaren Lignocellulosefasern sind insbesondere ausgewählt aus der Gruppe bestehend aus Holzspänen, Holzfasern, Holzschliff, Flachsfasern, Getreidefasern, Kokosfasern, Sisalfasern, Schilffasern, Hanffasern, Palmfasern oder Mischungen aus den genannten Faserarten. Die Größe und sonstige Aufbereitung der Fasern richtet sich nach dem Einsatzzweck des Baustoffes und kann in geeigneter und dem Fachmann bekannte Art und Weise durchgeführt werden. Neben der Verwendung der vorgenannten Lignocellulosefasern besteht auch die Möglichkeit, dass hier Gras, Getreide, Zellulose beziehungsweise Zellulosefasern oder entsprechend aufbereitetes Altpapier sowie Kombinationen daraus verwendet werden.

Um eine zufriedenstellende Verbindung der verpressten Lignozellulosefasern beziehungsweise tierischen Fasern zu erreichen und um das Abbrandverhalten günstig zu beeinflussen, ist vorgesehen, dass in der vorgenannten Verwendung der wässrigen Lösung als brandhemmendes Klebe- oder Bindemittel der Wasserglasanteil bei zwischen 10 und 80 Vol-%, bevorzugt bei zwischen 30 und 70 Vol-% liegt. Derartige Wasserglasanteile bewirken eine höhere Klebeleistung der wässrigen Lösung und wirken sich günstig auf die Verbindung der Fasern aus. Um eine optimale Benetzung der Fasern zu sicherzustellen, ist vorgesehen, dass der Anteil der wenigstens einen grenzflächenaktiven Substanz, die als Modifizierungsmittel der wässrigen Lösung beigegeben wird, bei zwischen 0 und 0,05 Vol-%, insbesondere zwischen 0,001 und 0,01 Vol-% liegt. Die erfindungsgemäße Verwendung bleibt jedoch hierauf nicht beschränkt und umfasst den Einsatz weiterer grenzflächenaktiver Substanzen, bevorzugt von Tensiden, sowie Mischungen daraus. Eine weitere Verwendung der wässrigen Lösung sieht vor, dass die wässrige Lösung als präventives Brandschutzmittel, insbesondere als Wald- beziehungsweise Flächenbrandschutzmittel verwendet wird. Die wässrige Lösung ist hierfür als versprüh- oder vernebelbare Lösung hergestellt und wird präventiv als Wald beziehungsweise Flächenbrandschutzmittel auf nicht brennende Wald- beziehungsweise Flächenbereiche aufgesprüht oder über diesen vernebelt. Die wässrige Lösung bildet einen Film aus, der sämtliche Pflanzenteile benetzt und somit deren Abbrandneigung wesentlich verringert. Negative Auswirkungen auf die Pflanze hat das Wald- beziehungsweise Flächenbrandschutzmittel hierbei nicht. Vielmehr kommt aufgrund der erfindungsgemäßen Zusammensetzung der wässrigen Lösung ein Düngeeffekt zum Tragen, der die Widerstandsfähigkeit der Pflanzen günstig beeinflusst. In der zuvor genannten Verwendung der wässrigen Lösung als Wald- beziehungsweise Flächenbrandschutzmittel beziehungsweise präventives Brandschutzmittel kann dieses beispielsweise streifenartig vor einem Brandherd auf die dort befindlichen Pflanzen und Flächen aufgesprüht werden und verhindern, dass ein Übergriff des Brandes auf den entsprechend behandelten Bereich stattfindet beziehungsweise hier ein Abbrand verzögert erfolgt. Als vorteilhaft erweist es sich in diesem Zusammenhang, wenn die versprüht oder vernebelte Lösung Tröpfchen mit einem mittleren Durchmesser von zwischen 10 und 50 *µ*m, insbesondere von zwischen 20 und 45 *µ*m, bevorzugt von zwischen 20 und 40 *µ*m aufweist. Der Wasserglasanteil in der wässrigen Lösung liegt günstigerweise bei zwischen 10 und 70 Vol-%, bevorzugt bei zwischen 30 und 67 Vol-%, die wässrige Lösung weist bei Raumtemparatur vorteilhafterweise eine Viskosität von zwischen 1 und 3 mPa·s auf.

Eine weitere Verwendung der erfindungsgemäßen wässrigen Lösung sieht vor, dass diese als Dicht- oder Vergussmasse zur Verfügung gestellt wird. Diese Verguss- oder Dichtmasse eignet sich bevorzugt für den brand- oder luftdichten Abschluss von Gebäude-, Wand- oder Deckendurchdringungen in Bauwerken oder dergleichen. Entsprechenden Durchdringungen kommt eine besondere Bedeutung beim Übergreifen von Bränden, entweder in die Zwischenlagen mehrschichtiger Bauwerke oder aber von der Außenauf die Innenseite von Bauwerken zu. Hier ist es daher von besonderer Bedeutung, einen luft- und branddichten Abschluss zur Verfügung zu stellen. Aufgrund der brandhemmenden Eigenschaften eignet sich die vorgeschlagene wässrige Lösung hierfür in besonderer Art und Weise. Um die Verguss- beziehungsweise Spritz- oder Gießfähigkeit der wässrigen Lösung sicherzustellen und um eine ausreichende Haftung in den verschiedenen zuvor genannten Durchdringungen zu gewährleisten, weist die wässrige Lösung als Modifizierungsmittel insbesondere ein Binde- oder Verdickungs- beziehungsweise Klebemittel auf. Ein derartiges Bindemittel kann beispielsweise in Form von Zellulose, natürlichen oder synthetischen Wachsen, Ölen oder Harzen der wässrigen Lösung beigegeben werden. Des Weiteren eignet sich beispielsweise als Verdickungsmittel besonders Talkum, Kreide oder Sägemehl. Auch Sand und hierbei bevorzugt Fein- oder Quarzsand sind Modifizierungsmittel, die der wässrigen Lösung beigegeben werden können, um eine Verguss- oder Dichtmasse zur Verfügung zu stellen, die auch in Wanddurchdringungen zum einen einen ausreichenden Abschluss bildet, zum anderen in ausreichender Art und Weise haftet.

In der Verwendung der bereits genannten Modifizierungsmittel besteht selbstverständlich auch die Möglichkeit, dass der wässrigen Lösung natürliches oder synthetisches Wachs, bevorzugt Pflanzenwachs, Erdwachs, Stearin oder Paraffin, natürliches oder synthetisches Harz, natürliches oder synthetisches Öl sowie chemisch modifizierte, insbesondere verseifte oder in Wasser emulgierte Wachse, Öle oder Harze beigegeben werden, um zum einen das Abbinde- und Bindeverhalten der wässrigen Lösung bei der Verwendung als Verguss- oder Dichtmasse zu beeinflussen, zum anderen um die ausreichende Brandhemmung sicherzustellen.

Die Erfindung umfasst des Weiteren einen Baustoff mit einer auf der zuvor beschriebenen wässrigen Lösung basierenden Imprägnierung oder Benetzung. Im Gegensatz zu einer Obeflächenbeschichtung bzw. einem Anstrich ist die Imprägnierung bzw. Benetzung dadurch charakterisiert, dass auch die innere Struktur des behandelten Baustoffes mit der wässrigen Lösung beschichtet oder benetzt ist. Die Brandhemmung ist somit auch in den tieferen Strukturschichten des Baustoffes gewährleistet und das Abbrandverhalten bzw. die Brandwiderstandsfähigkeit des Baustoffes wird somit entscheidend beeinflusst bzw. verbessert. Der die Imprägnierung oder Benetzung aufweisende Baustoff ist bevorzugt ausgewählt aus der Gruppe bestehend aus Vollholz, Naturfaserplatte, insbesondere aus gepressten Holz-, Flachs-, Getreide-, Kokos-, Sisal-, Schilf-, Hanf- oder Palmfasern gebildeten Naturfaserplatten, Platten aus Wolle oder aber Platten aus Fasermischungen, des Weiteren aus Holzwolleplatten, Schichtholz, Leimholz, MDF, HDF, OSB, Spanplatte, Sperrholz und/oder Furniersperrholz. Der erfindungsgemäße Baustoff zeichnet sich dadurch vorteilhaft aus, dass die Imprägnierung oder Benetzung in die Oberfläche des Baustoffes sowie in die Oberfläche der den Baustoff bildenden Stoffe oder Fasern eingedrungen oder eingebracht ist. Eine derartige Imprägnierung kann zum einen durch oberflächlichen Anstrich der Baustoffe erfolgen, zum anderen kann zur Einbringung der Imprägnierung oder Benetzung ein Druckimprägnierverfahren angewendet werden. Die Imprägnierung oder Benetzung kann daneben auch durch Sprühen, Nebeln oder Streichen auf oder in die Oberfläche auf- oder eingebracht werden. Die Erfindung umfasst somit Baustoffe, die mit sämtlichen dem Fachmann bekannten Verfahren aufgebrachte Imprägnierungen oder Benetzungen aufweisen.

Vorgesehen ist, dass der Anteil der Imprägnierung oder Benetzung bezogen auf die Gesamtmasse des Baustoffes bei zwischen 0,5 und 30 %, insbesondere bei zwischen 2 und 15 %, bevorzugt bei zwischen 5 und 10 % liegt. Durch die auf- oder eingebrachte wässrige Lösung wird die Gesamtmasse des Baustoffes erhöht, da nach Verdunsten des Lösungsmittels die im Lösungsmittel gelösten Bestandteile der wässrigen Lösung im Baustoff verbleiben und somit dessen Gesamtmasse erhöhen. Der Anteil der Imprägnierung oder Benetzung bezogen auf die Gesamtmasse des Baustoffes kann somit in den unterschiedlichen Stadien der Imprägnierung variieren.

Die Erfindung umfasst des Weiteren ein Dämmstoffmaterial, das eine auf der wässrigen Lösung wie zuvor beschriebene Imprägnierung oder Benetzung aufweist. Das Dämmstoffmaterial zeichnet sich dadurch aus, dass die wässrige Lösung bzw. deren Komponenten in die Struktur des Dämmmaterials eingedrungen sind und es hierbei zu einer weitgehenden Benetzung oder Beschichtung sämtlicher Oberflächen des Dämmstoffmaterials kommt. Die verbesserte Imprägnierung oder Benetzung resultiert aus der erfindungsgemäßen Zusammensetzung der wässrigen Lösung. Aufgrund einer herabgesetzten Grenzflächenspannung bzw. dem Aufbrechen der Grenzflächenspannung in der wässrigen Lösung kann diese auch in die Oberflächenstrukturen der Dämmstoffmaterialien eindringen. Eine Anlagerung in den Zellzwischenräumen ist ebenfalls möglich. Hierdurch kann die Brandwiderstandsfähigkeit erhöht bzw. die An- bzw. Abbrandgeschwindigkeit verringert werden. Beim Abbrennen bildet sich aufgrund der Bestandteile der wässrigen Lösung eine Kohleschicht auf sämtlichen Oberflächen der Dämmstoffmaterialien bzw. der imprägnierten oder mit der wässrigen Lösung behandelten Baustoffe. Diese Kohleschicht bewirkt zum einen Sauerstoffabschluss, so dass ein weiterer Abbrand erschwert wird, zum anderen werden hierbei Gase freigesetzt, die ein weiteres Abbrennen der Dämmstoffe bzw. Baustoffe ver- oder behindern. Auch begünstigt wird die frühe Selbstverlöschung des Materials.

Das mit der wässrigen Lösung imprägnierte oder benetzte Dämmstoffmaterial, das erfindungsgemäß vorgeschlagen wird ist insbesondere ausgewählt aus der Gruppe bestehend aus auf Lignozellulose basierendem Dämmstoffmaterial, tierischem Dämmstoffmaterial oder Kombinationen daraus. Derartiges Dämmstoffmaterial kann beispielsweise aus Holz, Holzspänen oder Holzfasern bestehen. Insbesondere Holzspäne eignen sich hervorragend als Dämmstoffmaterial und bilden zum einen eine ausreichend große Oberfläche für eine zufriedenstellende Imprägnierung oder Benetzung mit der wässrigen Lösung, zum anderen kann aufgrund der Spanstruktur die wässrige Lösung in die Struktur der Holzspäne eindringen und dort eine vollständige Imprägnierung oder Benetzung sämtlicher Oberflächen gewährleisten. Die imprägnierten Holzspäne können in die für den Dämmstoffmaterialeintrag vorgesehenen Zwischenräume eingeblasen, eingefüllt oder in sonstiger Art eingebracht werden. Aufgrund der brandhemmenden Imprägnierung oder Benetzung kommt es hier zu einem verzögerten Abbrand der Dämmschicht. Durch die Zusammensetzung der erfindungsgemäßen wässrigen Lösung findet ein Verkleben beziehungsweise Verklumpen der Dämmmaterialien nicht statt. Neben der Verwendung von auf Holz, Holzspänen oder Holzfaser basierenden Dämmstoffmaterialien können auch Flachsfasern, Getreidefasern, Kokosfasern, Sisalfasern, Schilffasern, Hanffasern, Palmfasern oder Mischungen aus diesen Fasern sowie den Fasern und Holzspänen verwendet werden. Alternativ oder zusätzlich kann als Dämmstoffmaterial auch Gras oder Getreide verwendet werden, das entsprechend imprägniert bzw. benetzt wurde. Als weiteres Dämmstoffmaterial oder als Beimischung zu einem Dämmstoffmaterial findet Zellulose, Zellulosefasern oder (aufbereitetes) Altpapier Verwendung. Auch diese Materialien sind mit der wässrigen Lösung imprägniert bzw. benetzt und damit brandhemmend aktiviert. Tierische Dämmstoffmaterialien und hier insbesondere Wolle können als Dämmstoffmaterial, das die auf der wässrigen Lösung gemäß der Erfindung basierende Imprägnierung oder Benetzung aufweist, verwendet werden. Ebenfalls besteht die Möglichkeit, Kombinationen aus den vorgenannten pflanzlichen und tierischen Fasern als Dämmstoffmaterial zu verwenden oder synthetische Dämmstoffe allein oder in Beimischung einzusetzen. Die Imprägnierung bzw. Benetzung kann auf das Faser- bzw. Dämmstoffmaterialgemisch aufgebracht werden. Alternativ besteht auch die Möglichkeit, dass sämtliche Bestandteile der Faser- bzw. Dämmstoffmischung einzeln imprägniert oder benetzt werden, da unter Umständen die Möglichkeit besteht, dass hier unterschiedliche Imprägnier- oder Benetzungsverfahren, -zeiten oder intensitäten angezeigt sind. Zur Bildung des letztendlich verwendeten Dämmstoffmaterials können die imprägnierten oder benetzten Materialien dann zusammengeführt und in die Dämmstoffschicht eingebaut werden.

Als vorteilhaft wird angesehen, wenn die Imprägnierung oder Benetzung in die Oberfläche des Dämmstoffmateriales eingebracht ist. Daneben besteht selbstverständlich auch die Möglichkeit und ist es von der Erfindung umfasst, dass der das Dämmstoffmaterial bildende Stoff bzw. die Fasern von der wässrigen Lösung durchdrungen ist/sind. Je nach ausgewähltem Dämmstoffmaterial wird es als günstig angesehen, wenn die Imprägnierung oder Benetzung durch Sprühen, Nebeln oder in einem Druckimprägnierungsverfahren in das Dämmstoffmaterial eingebracht bzw. auf dessen Oberfläche auf- oder eingebracht ist. Neben den vorgenannten Arten der Imprägnierung oder Benetzung besteht selbstverständlich auch die Möglichkeit, dass das Dämmstoffmaterial in eine entsprechende wässrige Lösung getaucht wird. Das Dämmstoffmaterial wird von der wässrigen Lösung durchdrungen. Die Lösungsmittelanteile verdunsten und die gelösten Bestandteile verbleiben dann im Dämmstoffmaterial und bewirken die Brandwiderstandsfähigkeit bzw. verschlechtern das Abbrandverhalten. Für die Imprägnierung bzw. Benetzung wird vorübergehend die relative Feuchte des Dämmstoffmaterials erhöht. Nach Verdunsten des Lösungsmittels entspricht die relative Feuchte des imprägnierten Dämmstoffmaterials bevorzugt der des nicht imprägnierten. Der Anteil der Imprägnierung oder Benetzung bezogen auf die Gesamtmasse des Dämmstoffmaterials liegt bei 1 bis 30 %, insbesondere bei 2 bis 15 %, bevorzugt bei 3 bis 10 %. Wobei die Bestimmung des Anteils der Imprägnierung oder Benetzung bezogen auf die Gesamtmasse des Dämmstoffmateriales im trockenen bzw. nach der Imprägnierung getrockneten Zustand vorgenommen wird. Bei bzw. während der Imprägnierung oder Benetzung wird die relative Feuchte des Dämmstoffmaterials erhöht, da dieses mit der wässrigen Lösung in Kontakt gebracht wird. Nach Abschluss der Imprägnierung oder Benetzung erfolgt eine Trocknung des Dämmstoffmaterials auf die ursprüngliche Ausgangsfeuchte des nicht imprägnierten Dämmstoffmateriales.

Die Erfindung umfasst gleichermaßen einen aus Lignozellulosefasern oder tierischen Fasern, insbesondere Wolle gebildeten Baustoff, bei dem die wässrige Lösung wie zuvor beschrieben als brandhemmendes Klebe- oder Bindemittel verwendet wird. Die für die Herstellung des Baustoffs verwendeten Fasern sind insbesondere ausgewählt aus der Gruppe bestehend aus Holzspänen, Holzfasern, Holzschliff, Flachsfasern, Getreidefasern, Kokosfasern, Sisalfasern, Schilffasern, Hanffasern, Palmfasern oder Mischungen aus diesen Fasern und Faserarten. Daneben besteht die Möglichkeit, dass im Baustoff Gras, Getreide oder aber Zellulose, Zellulosefasern oder Altpapier bzw. entsprechend aufbereitetes Altpapier oder Kombinationen daraus verwendet werden. Die Fasern, tierischen oder pflanzlichen Ursprungs, werden hierbei mit der als brandhemmendes Klebe- oder Bindemittel verwendbaren wässrigen Lösung benetzt, vermengt oder imprägniert und danach in die gewünschte Form des Baustoffes, beispielsweise in Platten-, Balken- oder sonstige Form gepresst beziehungsweise geformt. Alternativ hierzu besteht selbstverständlich auch die Möglichkeit, dass zunächst aus den Fasern oder Fasergemischen der Baustoff in der Grundform gebildet, beispielsweise gepresst oder in sonstiger Art und Weise geformt wird und der Eintrag der wässrigen Lösung nachträglich erfolgt. Die wässrige Lösung durchdringt dabei den gebildeten Baustoffrohkörper und bewirkt zum einen eine brandhemmende Imprägnierung des Baustoffes, zum anderen eine Verfestigung und Vernetzung beziehungsweise Verklebung und/oder dauerhafte Verbindung der Faserbestandteile.

Der Anteil des Klebe- oder Bindemittels bezogen auf die Gesamtmasse des Baustoffes liegt dabei bevorzugt bei zwischen 0,5 und 50 %, insbesondere bei 1 bis 30 %, bevorzugt bei 2 bis 25 %. Über die Anpassung des Anteiles des Klebe- oder Bindemittels bezogen auf die Gesamtmasse kann auch die Härte des Baustoffes eingestellt werden. Zudem kann durch Auswahl geeigneter Modifizierungsmittel eine weitere Anpassung des Baustoffes an verschiedene Einsatzzwecke durchgeführt werden. Neben den brandhemmenden Substanzen in der wässrigen Lösung, wie beispielsweise der Molke und dem Wasserglas sowie einem aus der Gruppe der Saccharide ausgewählten weiteren Modifizierungsmittel können so beispielsweise Kreide, Talkum oder Sand beigegeben werden, die die Härte und das Abbindeverhalten des Baustoffes weiter verbessern beziehungsweise auf einen entsprechenden Verwendungszweck anpassen. Durch die Zugabe geeigneter Harze, Öle oder Wachse kann zusätzlich zur brandhemmenden Imprägnierung oder Benetzung eine wasserabweisende Funktionalisierung des Baustoffes durchgeführt werden. Werden der wässrigen Lösung Pigmente zugesetzt, so kann bereits über das Klebe- oder Bindemittel neben der Brandhemmung auch eine Farbgebung erzielt werden.

Ebenfalls von der Erfindung umfasst ist ein Baustoff mit einem aus der wie zuvor beschriebenen wässrigen Lösung gebildeten Anstrich. Hierzu wird die wässrige Lösung durch die Beimengung von Binde- oder Verdickungsmitteln als Modifizierungsmittel entsprechend modifiziert, sodass hieraus neben einer Imprägnierung auch eine Oberflächenbeschichtung oder -versiegelung zur Verfügung gestellt werden kann. Der mit dem Anstrich versehene Baustoff beziehungsweise ein daraus gebildetes Bauwerk oder ein Bauwerksteil ist dabei bevorzugt ausgewählt aus der Gruppe bestehend aus Vollholz, (Holz)brettern, (Holz)tafeln, (Holz)-verschalungen, (Holz)verblendungen, (Holz)balken. Daneben können als Baustoff auch Naturfaserplatten, insbesondere aus Holzfasern, Flachsfasern, Getreidefasern, Kokosfasern, Sisalfasern, Schilffasern, Hanffasern, Palmfasern oder Fasermischungen hergestellte Naturfaserplatten oder aber Naturfaserplatten aus Wolle beziehungsweise mit Wollbeimischung zum Einsatz kommen. Ebenfalls besteht die Möglichkeit, dass der Anstrich auf einem aus Holzwolleplatten, aus Schichtholz, Schichtholzplatten, Leimholz, Leimholzplatten, Leimbindern, MDF, HDF, OSB, Spanplatten, Sperrholz, Funiersperrholz, Funier oder Funierplatten gebildeten Baustoff oder Bauwerk beziehungsweise Bauwerksteil aufgebracht ist. Erfindungsgemäß ist dabei vorgesehen, dass durch die wässrige Lösung nicht nur ein oberflächlicher Anstrich beziehungsweise eine Oberflächenbeschichtung oder -versiegelung des Baustoffes erfolgt, sondern auch ein Eindringen der wässrigen Lösung in die Struktur des Baustoffes stattfindet, sodass neben der Oberflächenversiegelung auch eine Imprägnierung erfolgt. Selbstverständlich kann, bei entsprechender Auswahl der beigemischen Modifizierungsmittel eine derartige Imprägnierung gerade verhindert werden und der Anstrich lediglich auch der Oberfläche des Baustoffes verbleiben. Hier bildet dieser dann eine geschlossene Beschichtung und versiegelt den Baustoff. Bei Brand bildet sich aufgrund des Anstriches zunächst eine brandhemmende Kohleschicht, die den darunterliegenden Baustoff gegenüber Luftsauerstoff abschließt und damit das natürliche Abbrandverhalten von Holz wesentlich verbessert.

Neben dem Anstrich auf den einzelnen vorgenannten Baustoffen besteht selbstverständlich auch die Möglichkeit, dass es sich bei den erfindungsgemäß vorgesehenen Baustoff, um verbaute Baumaterialien handelt und der Anstrich somit auf einem aus den vorgenannten Baustoffen gebildeten Bauwerk oder Bauwerksteil aufgetragen ist. Eine als günstig angesehene Ausführungsform sieht vor, dass der Anstrich farblos oder halbtransparent ist beziehungsweise eine Farbpigmentbeimischung aufweist. Eine weitere bevorzugte Ausführungsform sieht vor, dass der Anstrich die Oberfläche des Baustoffes wasserdicht versiegelt.

### Ausführungsbeispiele

Nachfolgend wird die Erfindung anhand von Beispielen dargestellt. Die gezeigten Ausführungsbeispiele dienen lediglich der Verdeutlichung der Erfindung, diese ist jedoch nicht auf die in den Ausführungsbeispielen gezeigten Ausführungsformen beschränkt.

### Beispiel 1: Herstellung einer wässrigen Lösung mit frischer Süßmolke und Wasserglas

siegelung des Baustoffes erfolgt, sondern auch ein Eindringen der wässrigen Lösung in die Struktur des Baustoffes stattfindet, sodass neben der Oberflächenversiegelung auch eine Imprägnierung erfolgt. Selbstverständlich kann, bei entsprechender Auswahl der beigemischen Modifizierungsmittel eine derartige Imprägnierung gerade verhindert werden und der Anstrich lediglich auch der Oberfläche des Baustoffes verbleiben. Hier bildet dieser dann eine geschlossene Beschichtung und versiegelt den Baustoff. Bei Brand bildet sich aufgrund des Anstriches zunächst eine brandhemmende Kohleschicht, die den darunterliegenden Baustoff gegenüber Luftsauerstoff abschließt und damit das natürliche Abbrandverhalten von Holz wesentlich verbessert.

Neben dem Anstrich auf den einzelnen vorgenannten Baustoffen besteht selbstverständlich auch die Möglichkeit, dass es sich bei den erfindungsgemäß vorgesehenen Baustoff, um verbaute Baumaterialien handelt und der Anstrich somit auf einem aus den vorgenannten Baustoffen gebildeten Bauwerk oder Bauwerksteil aufgetragen ist. Eine als günstig angesehene Ausführungsform sieht vor, dass der Anstrich farblos oder halbtransparent ist beziehungsweise eine Farbpigmentbeimischung aufweist. Eine weitere bevorzugte Ausführungsform sieht vor, dass der Anstrich die Oberfläche des Baustoffes wasserdicht versiegelt.

### Ausführungsbeispiele

Nachfolgend wird die Erfindung anhand von Beispielen dargestellt. Die gezeigten Ausführungsbeispiele dienen lediglich der Verdeutlichung der Erfindung, diese ist jedoch nicht auf die in den Ausführungsbeispielen gezeigten Ausführungsformen beschränkt. Die Beispiele 1 bis 4, 7 und 8 betreffen keine erfindungsgemäßen Ausführungen.

### Beispiel 1: Herstellung einer wässrigen Lösung mit frischer Süßmolke und Wasserglas

Sauermolke. Hinzugegeben wurden 500 ml in Wasser gelöstes Natriumwasserglas.

Auch die so hergestellte wässrige Lösung neigte zur Flockenbildung und war insgesamt für eine zufriedenstellende Verdüsung bzw. Vernebelung zu klebrig. Aufgrund der pH-Änderung wegen der verwendeten Sauermolke kam es zu Ausfällungen des Wasserglases. Auch die in Beispiel 3 hergestellte Lösung erwies sich als flockig und für eine Verdüsung bzw. Imprägnierung zu klebrig.

### Beispiel 4: Herstellung einer wässrigen Lösung aus Süßmolke, Laktose, Wasser und Wasserglas

Für eine weitere Versuchslösung wurden 250 ml aus Pulver hergestellte Süßmolke mit 250 ml in Wasser aufgelöste Laktose sowie 300 ml in Wasser aufgelöstes Natriumwasserglas vermischt und zusätzlich 200 ml Wasser zur Verdünnung beigegeben. Die gebildete Lösung wies keine Flockenbildung auf, war jedoch für eine Verwendung als Imprägnierlösung zu klebrig und zeigte keine zufriedenstellende Imprägnierleistung. Auch hier war eine Verstopfung der für die Vernebelung vorgesehenen Düsen zu befürchten.

Sämtliche in den Beispielen 1-4 genannten wässrigen Lösungen erwiesen sich entweder aufgrund von Flockenbildung oder einer zu hohen Viskosität als ungeeignet, um als Imprägnierlösung insbesondere für die Imprägnierung von.Dämm- oder Baustoffen Verwendung zu finden. Das Brandverhalten der mit den Lösungen behandelten Bau- bzw. Dämmstoffe wurde nicht überprüft.

### Beispiel 5: Herstellung einer Lösung aus Sauermolke, Wasserglas, Saponin und Wasser

Eine wässrige Lösung wurde hergestellt aus 100 g Sauermolke, die in 250 ml Wasser gelöst wurde. Zusätzlich wurden 500 ml in Wasser gelöstes Wasserglas und 20 ml Saponin zur Verfügung gestellt und in 350 ml Wasser gelöst. Die hieraus resultierende wässrige Lösung zeigte sich als leicht klebrig, was auf den hohen Anteil an Natriumwasserglas zurückzuführen ist. Die wässrige Lösung zeigte keine Flockenbildung und eignete sich für die Behandlung von Dämmstoffen. Aufgrund der klebrigen Konsistenz der Lösung neigten die Dämmstoffpartikel jedoch zum Verklumpen bzw. Verkleben, weshalb eine nur wenig zufriedenstellende Verteilung des behandelten Dämmstoffmaterials, beispielsweise in einem Bauwerk oder Bauwerkzwischenraum möglich war. In einem Abbrandtest zeigte das mit der Lösung behandelte Dämmstoffmaterial ein zufriedenstellendes Abbrandverhalten, das heißt, einen geringen Brandfortschritt sowie ein baldiges Selbstverlöschen der Flamme.

### Beispiel 5: Herstellung einer wässrigen Lösung aus Sauermolke, Laktose und Wasserglas unter optionaler Zugabe von Saponin

Eine weitere Versuchsmischung wurde hergestellt aus 100 g in 250 ml Wasser gelöstem Sauermolkepulver, 100 g in Wasser gelöster Laktose und 500 ml in Wasser gelöstem Natriumwasserglas. Es ergab sich hieraus eine sehr klebrige wässrige Lösung. Diese ist insbesondere geeignet für die Behandlung von Feststoffen oder zur Festigung von Baustoffen bzw. sonstigen Materialien, beispielsweise aus Fasern oder Spänen gebildete Feststoffe oder Platten. Auch zeigten die mit der wässrigen Lösung behandelten Bau- und Dämmstoffe ein mit dem in Beispiel 5 festgestellten vergleichbares Brandverhalten. Durch Modifikation der Lösung über Zugabe von 10 ml Saponin ergab sich eine wässrige Lösung, die beispielsweise für Anstriche oder dergleichen verwendet werden kann.

### Beispiel 6: Herstellung einer wässrigen Lösung aus Laktose, Sauermolke, Saponin und Natriumwasserglas

Eine wässrige Lösung wurde hergestellt aus 100 g in Wasser gelöster Laktose, 50 g in Wasser gelöstem Sauermolkepulver, 20 ml hochverdünntem Saponin. Die Substanzen wurden jeweils separat in Wasser gelöst und dann in einem Gefäß vereinigt. Der Mischung wurde in Wasser gelöstes Natriumwasserglas beigegeben und die gesamte Mischung durch Rühren homogenisiert.

Die in Beispiel 6 hergestellte wässrige Lösung zeigte keinerlei Klumpen- oder Flockenbildung und war nur schwach bis nicht klebrig. Die so hergestellte wässrige Lösung eignete sich zum Versprühen oder Vernebeln und wies eine zufriedenstellende Imprägnierleistung mit Bau- bzw. Dämmstoffen und vergleichbaren Materialien auf. Ein mit der Lösung imprägnierter Dämmstoff auf Holzspanbasis wurde für Abbrandversuche verwendet.

### Beispiel 7: Brandversuch in Anlehnung an DIN ISO 9239-1 resp. DIN 4102 T14 sowie die Prüfvorschrift für schüttbare Materialien gemäß VKF mit unbehandelten Holzdämmspänen

In einem auf 140 bis 160 ° aufgeheizten RAdiant Panel Brennbarkeits-Prüfapparat wurden im Verhältnis 1:2 vorverdichtete unbehandelte Rohholzspäne eingebracht. Das in der vorgesehenen Prüfkammer eingebrachte vorverdichtete Material wurde mit einem Linienbrenner beaufschlagt. Eine in der Prüfkammer ebenfalls vorgesehene Abzugsöffnung wurde halb geöffnet, um eine Sauerstoffzufuhr zu gewährleisten. Der Brandfortschritt wurde anhand von in 10 cm-Abständen angeordneten Markierungen überprüft. Nach 10 Minuten wurde die Beaufschlagung des Prüfmaterials mit dem Linienbrenner beendet und der weitere Fortschritt des Brandes überwacht.

Beim Brandversuch mit unbehandelten Rohspänen war bereits nach 2,5 Minuten ein Brandfortschritt von 10 cm zu notieren. Innerhalb von 4 Minuten 5 Sekunden. erreichte der Brandfortschritt 100 cm. Nach 4 Minuten 30 Sekunden. erfolgte ein Selbstverlöschen der Flamme, da der Bereich außerhalb des Bereichs des Linienbrenners lag. Bis zum Versuchsende war ein vereinzeltes Nachglimmen in der gesamten Fläche zu vermerken. Starke Glutnester traten bis in den Bereich von 40 cm des Brandfortschrittes auf. Zusätzlich wurde eine starke Rauchentwicklung bemerkt. Die Flammen brannten oberflächlich bis zum Ende der Versuchsanordnung. Im Bereich bis ca. 40 cm wird ein Durchbrand der Probe in ganzer Dicke festgestellt. Nach dem Durchbrennen an der Oberfläche konnte ein weiteres Brandnest bei 35 cm Brandfortschritt festgestellt werden, das erst nach 9,35 Min. verlöschte.

### Beispiel 8: Abbrandversuch Anlehnung an DIN ISO 9239-1 resp. DIN 4102 T14 sowie die Prüfvorschrift für schüttbare Materialien gemäß VKF mit mit Molke-Soda-Gemisch behandelten Holzdämmspänen

Im Versuchsaufbau, wie in Beispiel 7 beschrieben, wurden statt unbehandelter Holzdämmspäne mit Molke-Soda-Mischung behandelte Holzdämmspäne verwendet. Nach Aufheizen der Prüfvorrichtung und Beaufschlagung der verdichteten Dämmspäne wurde auch hier der Brandfortschritt überwacht. Insgesamt kam es zu einem früheren Verlöschen der Flamme. Nur im Startbereich konnte ein Nachglimmen nach Abschalten des Brenners festgestellt werden. Glutnester traten keine auf. Eine starke Rauchentwicklung wurde bemerkt. Es erfolgte ein oberflächlicher Abbrand bis zum Probenende, in der Fläche zeigten sich keine Flammennester. Die Probe war bis ca. 30 cm Brandfortschritt durchgebrannt. Ab ca. 30 cm Brandfortschritt waren nur noch die Späne an der Oberfläche verbrannt. Insgesamt zeigte die Imprägnierung mit Molke-Soda-Mischung bereits eine signifikante Verbesserung des Abbrandverhaltens gegenüber den unbehandelten Rohspänen, insbesondere was die Bildung von Glutnestern betrifft.

### Beispiel 9: Abbrandversuch in Anlehnung an DIN ISO 9239-1 resp. DIN 4102 T14 sowie die Prüfvorschrift für schüttbare Materialien gemäß VKF mit mit der wässrigen Lösung gemäß der vorliegenden Erfindung behandelten Holzdämmspänen

Dämmmaterial, im vorliegenden Fall Holzspäne, die auch bereits in den als Beispiele 7 und 8 beschriebenen Abbrandversuchen verwendet wurden, wurden mit der in Beispiel 6 beschriebenen wässrigen Lösung imprägniert. Zur Imprägnierung wurden die Späne in eine Imprägnierstation mit der erfindungsgemäßen wässrigen Lösung besprüht. Durch Umwälzung der Späne in der Imprägnierstation wurde eine vollständige Durchdringung mit dem Imprägniermittel sichergestellt. Nach Trocknung wurden die Holzspäne aus der Imprägnierstation entnommen und in die Prüfkammer verbracht. Zuvor erfolgte eine Verdichtung mit dem Verdichtungsfaktor 1:2, wie bereits in den zuvor beschriebenen Beispielen. Nach Aufheizen der Prüfkammer auf 140 bis 160°C erfolgte eine Beaufschlagung der verdichteten Späne mit der Flamme. Der Brandfortschritt endete bereits nach 20 cm und 2 Minuten 27 Sekunden Abbrand. Ein Selbstverlöschen der Flammen außerhalb des Linienbrenners beziehungsweise Strahlungsbereiches fand bereits nach 2 Minuten 45 Sekunden statt. Das mit der erfindungsgemäßen wässrigen Lösung behandelte Dämmmaterial zeigte beim Abbrand nur eine mäßige Rauchentwicklung. Ein gleichmäßiger Abbrand über die gesamte Länge der Prüfanordnung konnte nicht festgestellt werden, stattdessen bildete sich eine wandernde Flamme aus, die nach ca. 24 cm Brandfortschritt verlöschte. Ein Glutnest wurde in dem Bereich, in dem die Flamme verloschen ist, festgestellt. Insgesamt zeigte das mit der erfindungsgemäßen wässrigen Lösung behandelte Dämmmaterial somit ein wesentlich verbessertes Abbrandverhalten und ein frühzeitiges Selbstverlöschen der Flamme. Zurückzuführen ist das Brandverhalten auf die verbesserte Imprägnierung der Holzspäne und dem damit erreichbaren insgesamt verbesserten Abbrandverhalten. Die vollflächig imprägnierten Holzspäne wiesen an ihrer Oberfläche eine Kohleschicht auf, sodass ein Abschluss des Dämmmaterials gegenüber Sauerstoff stattfand, was zum vorzeitigen und selbstständigen Verlöschen der Flamme nach Ende der Strahlungsbeaufschlagung führte. Die Bildung der Kohleschicht wird begünstigt durch die in der wässrigen Lösung vorgesehenen Substanzen Laktose und Sauermolke. Zusätzlich hierzu bewirkt das Natriumwasserglas einen weiteren brandhemmenden Effekt. Durch die grenzflächenaktive Substanz, im Ausführungsbeispiel Saponin, wird die Benetzung und Imprägnierung der Späne, auch im Inneren der Span- oder Holzstruktur modifiziert und verbessert.

Insgesamt kann somit durch die erfindungsgemäße wässrige Lösung das Abbrandverhalten verbessert beziehungsweise ein frühzeitiges Verlöschen der Flamme erzielt werden. Die mit der erfindungsgemäßen wässrigen Lösung behandelten Dämmmaterialien sind somit insbesondere für die Verwendung in Holzbauwerken geeignet und verbessern hier wesentlich den Brandschutz derartiger Bauwerke. Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Wässrige Lösung enthaltend:
Molke, insbesondere Molke ausgewählt aus der Gruppe bestehend aus: Süssmolke und Sauermolke oder Kombinationen daraus
Wasserglas, insbesondere ausgewählt aus der Gruppe bestehend aus Natriumwasserglas und Kaliumwasserglas oder Kombinationen daraus, bevorzugt wobei das Wasserglas Natriumwasserglas, insbesondere bevorzugt Natriumwasserglas 37/40 Bé ist.
ein Lösungsmittel, insbesondere wasserhaltiges Lösungsmittel,
**gekennzeichnet durch** wenigstens ein Modifizierungsmittel, wobei das Modifizierungsmittel ausgewählt ist aus der Gruppe bestehend aus: Saponinen, insbesondere Saponinen gewonnen aus Sapindus mukorossi oder Quillaja saponaria; oder Kombinationen daraus.

2. Wässrige Lösung nach Anspruch 1, **gekennzeichnet durch** wenigstens ein weiteres Modifizierungsmittel ausgewählt aus der Gruppe bestehend aus natürlichen und/oder synthetischen Tensiden, bevorzugt anionischen, kationischen und amphoteren Tensiden; Zuckertensiden; Alkylpolyglycosiden und/oder Seifen.

3. Wässrige Lösung nach Anspruch 1 oder 2, **dadurch gekennzeichnet, dass** wenigstens ein weiteres Modifizierungsmittel vorgesehen ist, insbesondere wobei das weitere Modifizierungsmittel ausgewählt ist aus der Gruppe bestehend aus: Sacchariden, insbesondere Mono-, Di, Tri- oder Polysacchariden, bevorzugt Sccharose, Laktulose, Maltose oder Trehalose; Alditole; Carbonsäuren sowie deren Salze und Ester; Polyhydroxycarbonsäuren sowie deren Salze und Ester, insbesondere Zuckersäure; Zuckerester; Bindemitteln, insbesondere Zellulose; natürliches oder synthetisches Wachs, bevorzugt Pflanzenwachs, Erdwachs, Stearin oder Paraffin, natürliches oder synthetisches Harz, natürliches oder synthetisches Öl, chemisch modifziertes, insbesondere verseiftes oder in Wasser emulgiertes, natürliches oder synthetisches Wachs, chemisch modifiziertes, insbesondere verseiftes oder in Wasser emulgiertes natürliches oder synthetisches Harz, chemisch modifziertes, insbesondere verseiftes oder in Wasser emulgiertes, natürliches oder synthetisches Öl; Bier; Kasein; Verdickungsmittel, insbesondere Talkum, Kreide, Sägemehl, Sand, bevorzugt Fein- oder Quarzsand; Pigmente; natürliches oder synthetisches Rodentizid, Insektizid oder Fungizid.

4. Wässrige Lösung nach Anspruch 3 enthaltend:
zwischen 0,5 und 10 Vol-%, insbesondere zwischen 0,75 und 5 Vol-%, bevorzugt zwischen 0,95 und 1,25 Vol-% des wenigstens einen Saccharids, insbesondere Laktose,
zwischen 0,1 und 5 Vol-%, insbesondere zwischen 0,25 und 3 Vol-%, bevorzugt zwischen 0,5 und 1 Vol-% der wenigstens einen Molkenart, insbesondere Sauermolke, zwischen 0,001 und 0,5 Vol-%, insbesondere zwischen 0,001 und 0,1 Vol-%, bevorzugt zwischen 0,002 und 0,05 Vol-% des Saponins und zwischen 10 und 85 Vol-%, insbesondere zwischen 45 und 75 Vol-%, bevorzugt zwischen 50 und 70 Vol-% Wasserglas, 0 - 50 Vol-% wenigstens eines weiteren Modifizierungsmittels, wie in Anspruch 2 angegeben.

5. Verwendung der wässrigen Lösung nach einem der vorhergehenden Ansprüche als brandhemmendes Imprägnier- oder Beschichtungsmittel für einen insbesondere auf Lignocellulose basierenden Baustoff, insbesondere ausgewählt aus der Gruppe bestehend aus: Vollholz, Naturfaserplatte, insbesondere aus gepressten Holzfasern, Flachsfasern, Getreidefasern, Kokosfasern, Sisalfasern, Schilffasern, Hanffasern, Palmfasern, Fasermischungen oder Wolle gebildete Platte, Holzwolleplatte, Schichtholz, Leimholz, MDF, HDF, OSB, Spanplatte, Sperrholz, Furniersperrholz; oder für ein Dämmstoffmaterial, insbesondere wobei das Dämmstoffmaterial ausgewählt aus der Gruppe bestehend aus: auf Lignocellulose basierendem Dämmstoffmaterial, insbesondere Holz, Holzspäne oder Holzfasern, Flachsfasern, Getreidefasern, Kokosfasern, Sisalfasern, Schilffasern, Hanffasern, Palmfasern oder Fasermischungen, Gras, Getreide, Cellulose, Cellulosefasern und Altpapier, tierischem Dämmstoffmaterial, insbesondere Wolle oder Kombinationen daraus; wobei die wässrige Lösung bevorzugt als versprüh- oder vernebelbare Lösung vorliegt, insbesondere wobei die versprühte oder vernebelte Lösung Tröpfchen mit einem mittlere Durchmesser von zwischen 10 und 50 um, insbesondere von zwischen 20 und 45 um, bevorzugt von zwischen 20 und 40 um aufweist und/oder wobei der Wasserglasanteil in der wässrigen Lösung bei zwischen 10 und 70 Vol-%, bevorzugt bei zwischen 30 und 67 Vol-% liegt und/oder die wässrige Lösung bei Raumtemperatur eine Viskosität von zwischen 1 und 3 mPa.s aufweist.

6. Verwendung der wässrigen Lösung nach einem der Ansprüche 1 bis 4 als brandhemmende, streichfähige Auftragslösung für einen Baustoff, insbesondere einen Baustoff ausgewählt aus der Gruppe bestehend aus: Vollholz, Naturfaserplatte, insbesondere aus gepressten Holzfasern, Flachsfasern, Getreidefasern, Kokosfasern, Sisalfasern, Schilffasern, Hanffasern, Palmfasern, Fasermischungen oder Wolle gebildete Platte, Holzwolleplatte, Schichtholz, Leimholz, MDF, HDF, OSB, Spanplatte, Sperrholz, Furniersperrholz, wobei wenigstens ein weiteres Modifizierungsmittel ausgewählt ist aus der Gruppe bestehend aus: Bindemitteln, insbesondere Zellulose, natürliches oder synthetisches Wachs, bevorzugt Pflanzenwachs, Erdwachs, Stearin oder Paraffin, natürliches oder synthetisches Harz, natürliches oder synthetisches Öl, chemiscmodifiziertes, insbesondere verseiftes oder in Wasser emulgiertes,natürliches oder synthetisches Wachs, chemisch modifiziertes, insbesondere verseiftes oder in Wasser emulgiertes, natürliches oder synthetisches Harz, chemisch modifziertes, insbesondere verseiftes oder in Wasser emulgiertes, natürliches oder synthetisches Öl; Bier; Kasein; Verdickungsmittel, insbesondere Talkum, Kreide, Sägemehl, Sand, bevorzugt Fein- oder Quarzsand, wobei der Anteil des Modifizierungsmittels an der wässrigen Lösung bevorzugt bei zwischen 0 und 50 Vol-% liegt und/oder der Anteil des Saponins bei zwischen 0,001 und 0,05 Vol-%, insbesondere zwischen 0,001 und 0,01 Vol-% liegt, wobei die wässrige Lösung bei Raumtemperatur bevorzugt eine Viskosität von zwischen 2 und 1014 mPa.s, insbesondere zwischen 3 und 1010 mPa.s, bevorzugt zwischen 4 und 1012 mPa.s, aufweist.

7. Verwendung der wässrigen Lösung nach einem der Ansprüche 1 bis 4 als brandhemmendes Klebe- oder Bindemittel für einen aus gepressten Lignocellulosefasern und/oder tierischen Fasern, insbesondere Wolle, bildbaren Baustoff, insbesondere einen Baustoff ausgewählt aus der Gruppe bestehend aus: Holzspänen, Holzfasern, Holzschliff, Flachsfasern, Getreidefasern, Kokosfasern, Sisalfasern, Schilffasern, Hanffasern, Palmfasern oder Fasermischungen, Gras, Getreide, Zellulose, Zellulosefasern und Altpapier oder Kombinationen, wobei der Wasserglasanteil, insbesondere bei zwischen 10 und 80 Vol-%, bevorzugt bei zwischen 30 und 70 Vol-% und/oder der Anteil des Saponins bei bevorzugt zwischen 0,001 und 0,05 Vol-%, insbesondere zwischen 0,001 und 0,01 Vol-% liegt.

8. Verwendung der wässrigen Lösung nach einem der Ansprüche 1 bis 4 als präventives Brandschutzmittel, insbesondere Waldbrandschutzmittel.

9. Verwendung nach Anspruch 8, **dadurch gekennzeichnet, dass** die wässrige Lösung als versprüh- oder vernebelbare Lösung vorliegt, wobei bevorzugt die versprühte oder vernebelte Lösung Tröpfchen mit einem mittlere Durchmesser von zwischen 10 und 50 µm, insbesondere von zwischen 20 und 45 um, bevorzugt von zwischen 20 und 40 µm aufweist und/oder der Wasserglasanteil in der wässrigen Lösung bei zwischen 10 und 70 Vol-%, bevorzugt bei zwischen 30 und 67 Vol-% liegt und/oder die wässrige Lösung bei Raumtemperatur eine Viskosität von zwischen 1 und 3 mPa.s aufweist.

10. Verwendung der wässrigen Lösung nach einem der Ansprüche 1 bis 4 als Verguss- oder Dichtmasse.

11. Verwendung nach Anspruch 10, **dadurch gekennzeichnet, dass** die Verguss- oder Dichtmasse als spritz-, gieß- oder fließfähige Masse ausgebildet ist, insbesondere wobei ein brand- oder luftdichter Abschluss von Gebäude-, Wand- oder Deckendurchdringungen vorgesehen ist und/oder wenigstens ein weiteres Modifizierungsmittel ausgewählt ist aus der Gruppe bestehend aus Bindemitteln, insbesondere Zellulose, natürliches oder synthetisches Wachs, bevorzugt Pflanzenwachs, Erdwachs, Stearin oder Paraffin, natürliches oder synthetisches Harz, natürliches oder synthetisches Öl, chemisch modifiziertes, insbesondere verseiftes oder in Wasser emulgiertes, natürliches oder synthetisches Wachs, chemisch modifiziertes, insbesondere verseiftes oder in Wasser emulgiertes, natürliches oder synthetisches Harz, chemisch fortifiziertes, insbesondere verseiftes oder in Wasser emulgiertes, natürliches oder synthetisches Öl; Verdickungsmittel, insbesondere Talkum, Kreide, Sägemehl, Sand, bevorzugt Fein- oder Quarzsand, insbesondere wobei der Anteil des weiteren Modifizierungsmittels an der wässrigen Lösung bei zwischen 0 und 50 Vol-% liegt.

12. Baustoff mit einer auf der wässrigen Lösung gemäß einem der Ansprüche 1 bis 4 basierenden Imprägnierung oder Benetzung, wobei der Baustoff ausgewählt ist aus der Gruppe bestehend aus: Vollholz, Naturfaserplatte, insbesondere aus gepressten Holzfasern, Flachsfasern, Getreidefasern, Kokosfasern, Sisalfasern, Schilffasern, Hanffasern, Palmfasern, Fasermischungen oder Wolle gebildete Platte, Holzwolleplatte, Schichtholz, Leimholz, MDF, HDF, OSB, Spanplatte, Sperrholz, Furniersperrholz und/oder die Imprägnierung oder Benetzung in die Oberfläche des Baustoffes oder der den Baustoff bildenden Stoffe oder Fasern eingedrungen oder eingebracht ist, insbesondere wobei die Imprägnierung oder Benetzung durch Sprühen, Nebeln, Streichen oder Druckimprägnieren auf und/oder in die Oberfläche auf- und/oder einbringbar ist.

13. Dämmstoffmaterial mit einer auf der wässrigen Lösung gemäß einem der Ansprüche 1 bis 4 basierenden Imprägnierung oder Benetzung, wobei das Dämmstoffmaterial ausgewählt ist aus der Gruppe bestehend aus: auf Lignocellulose basierendem Dämmstoffmaterial, insbesondere Holz, Holzspäne oder Holzfasern, Flachsfasern, Getreidefasern, Kokosfasern, Sisalfasern, Schilffasern, Hanffasern, Palmfasern oder Fasermischungen, Gras, Getreide, Cellulose, Cellulosefasern und Altpapier, tierischem Dämmstoffmaterial, insbesondere Wolle oder Kombinationen daraus und/oder die Imprägnierung oder Benetzung in die Oberfläche des Dämmstoffmateriales und/oder der das Dämmstoffmaterial bildenden Stoffe oder Fasern eingedrungen oder eingebracht ist und/oder die Imprägnierung oder Benetzung durch Sprühen, Nebeln oder Druckimprägnierung auf und/oder in die Oberfläche auf- und/oder einbringbar ist, insbesondere wobei die relative Feuchte des imprägnierten Dämmstoffmateriales der des nicht imprägnierten Dämmstoffmateriales entspricht.

14. Aus die wässrige Lösung nach einem der Ansprüche 1 bis 4 als brandhemmendes Klebe- oder Bindemittel aufweisenden Lignocellulosefasern und/oder tierischen Fasern, insbesondere Wolle gebildeter Baustoff, wobei die Lignocellulosefasern ausgewählt sind aus der Gruppe bestehend aus: Holzspänen, Holzfasern, Holzschliff, Flachsfasern, Getreidefasern, Kokosfasern, Sisalfasern, Schilffasern, Hanffasern, Palmfasern oder Fasermischungen, Gras, Getreide, Cellulose, Cellulosefasern und Altpapier oder Kombinationen und/oder der Anteil des Klebe oder Bindemittels bezogen auf die Gesamtmasse des Baustoffes bei zwischen 0,5 und 50 %, insbesondere bei zwischen 1 und 35 %, bevorzugt bei zwischen 2 und 25 % liegt.

15. Baustoff mit einem aus der wässrigen Lösung gemäß Ansprüche 1 bis 4 gebildeten Anstrich.

16. Baustoff nach Anspruch 15, **dadurch gekennzeichnet, dass** der Baustoff ausgewählt ist aus der Gruppe bestehend aus: Vollholz, Holzbrettern, Holztafel, Holzverschalung, Holzverblendung, Holzbalken, Naturfaserplatte, insbesondere aus gepressten Holzfasern, Flachsfasern, Getreidefasern, Kokosfasern, Sisalfasern, Schilffasern, Hanffasern, Palmfasern, Fasermischungen oder Wolle gebildete Platte, Holzwolleplatte, Schichtholz, Schichtholzplatte, Leimholz, Leimholzplatte, Leimbinder, MDF, HDF, OSB, Spanplatte, Sperrholz, Furniersperrholz, Furnier, Furnierplatte und/oder der Anstrich farblos oder halbtransparent ist oder eine Farbpigmentbeimischung aufweist und/oder der Anstrich die Oberfläche des Baustoffes wasserdicht versiegelt.

## Claims

1. Aqueous solution containing:
whey, in particular whey selected from the group comprising:
sweet whey and acid whey or combinations thereof,
water glass, in particular selected from the group comprising sodium water glass and potassium water glass or combinations thereof, the water glass preferably being sodium water glass, particularly preferably sodium water glass 37/40 Bé,
a solvent, in particular a solvent containing water,
**characterized by** at least one modifying agent, wherein the modifying agent is selected from the group comprising: saponins, in particular saponins obtained from Sapindus mukorossi or Quillaja saponaria, or combinations thereof.

2. Aqueous solution according to claim 1, **characterized by** at least one further modifying agent selected from the group comprising natural and/or synthetic surfactants, preferably anionic, cationic, and amphoteric surfactants; sugar surfactants; alkyl polyglycosides and/or soaps.

3. Aqueous solution according to either claim 1 or claim 2, **characterized in that** at least one further modifying agent is provided, wherein the further modifying agent is selected in particular from the group comprising: saccharides, in particular mono-, di-, tri-, or polysaccharides, preferably sucrose, lactulose, maltose, or trehalose; alditols; carboxylic acids and their salts and esters; polyhydroxycarboxylic acids and their salts and esters, in particular sugar acid; sugar esters; binders, in particular cellulose; natural or synthetic wax, preferably plant wax, mineral wax, stearin, or paraffin, natural or synthetic resin, natural or synthetic oil, natural or synthetic wax which is chemically modified, in particular saponified or emulsified in water, natural or synthetic resin which is chemically modified, in particular saponified or emulsified in water, natural or synthetic oil which is chemically modified, in particular saponified or emulsified in water; beer; casein; thickening agents, in particular talc, chalk, sawdust, sand, preferably fine sand or quartz sand; pigments; natural or synthetic rodenticide, insecticide, or fungicide.

4. Aqueous solution according to claim 3, containing:
between 0.5 and 10 vol.%, in particular between 0.75 and 5 vol.%, preferably between 0.95 and 1.25 vol.%, of the at least one saccharide, in particular lactose,
between 0.1 and 5 vol.%, in particular between 0.25 and 3 vol.%, preferably between 0.5 and 1 vol.%, of the at least one type of whey, in particular acid whey,
between 0.001 and 0.5 vol.%, in particular between 0.001 and 0.1 vol.%, preferably between 0.002 and 0.05 vol.%, of saponin, and between 10 and 85 vol.%, in particular between 45 and 75 vol.%, preferably between 50 and 70 vol.%, of water glass, 0 - 50 vol.% of at least one further modifying agent as stated in claim 2.

5. Use of the aqueous solution according to any of the previous claims as a flame-retardant impregnating or coating agent for a building material which in particular is based on lignocellulose, in particular selected from the group comprising: solid wood, natural fiberboard, in particular made of compressed wood fibers, flax fibers, cereal fibers, coconut fibers, sisal fibers, reed fibers, hemp fibers, palm fibers, fiber mixtures, or panels made of wool, wood wool panels, laminated wood, glued wood, MDF, HDF, OSB, particle board, plywood, veneer plywood; or for an insulating material, wherein the insulating material is selected in particular from the group comprising: lignocellulose-based insulating material, in particular wood, wood chips, or wood fibers, flax fibers, cereal fibers, coconut fibers, sisal fibers, reed fibers, hemp fibers, palm fibers, or fiber mixtures, grass, cereals, cellulose, cellulose fibers, and recycled paper, animal insulating material, in particular wool or combinations thereof; wherein the aqueous solution is preferably present as a sprayable or atomizable solution, wherein the sprayed or atomized solution has in particular droplets with an average diameter between 10 and 50 µm, in particular between 20 and 45 µm, preferably between 20 and 40 µm, and/or wherein the proportion of water glass in the aqueous solution lies between 10 and 70 vol.%, preferably between 30 and 67 vol.%, and/or the aqueous solution has a viscosity between 1 and 3 mPa.s at room temperature.

6. Use of the aqueous solution according to any of claims 1 to 4 as a flame-retardant, spreadable application solution for a building material, in particular a building material selected from the group comprising: solid wood, natural fiberboard, in particular made of compressed wood fibers, flax fibers, cereal fibers, coconut fibers, sisal fibers, reed fibers, hemp fibers, palm fibers, fiber mixtures, or panels made of wool, wood wool panels, laminated wood, glued wood, MDF, HDF, OSB, particle board, plywood, veneer plywood, wherein at least one further modifying agent is selected from the group comprising: binders, in particular cellulose, natural or synthetic wax, preferably plant wax, mineral wax, stearin, or paraffin, natural or synthetic resin, natural or synthetic oil, natural or synthetic wax which is chemically modified, in particular saponified or emulsified in water, natural or synthetic resin which is chemically modified, in particular saponified or emulsified in water, natural or synthetic oil which is chemically modified, in particular saponified or emulsified in water; beer; casein; thickening agents, in particular talc, chalk, sawdust, sand, preferably fine sand or quartz sand, wherein the proportion of the modifying agent in the aqueous solution preferably lies between 0 and 50 vol.%, and/or the proportion of the saponin lies between 0.001 and 0.05 vol.%, in particular between 0.001 and 0.01 vol.%, wherein the aqueous solution preferably has a viscosity between 2 and 1014 mPa.s, in particular between 3 and 1010 mPa.s, preferably between 4 and 1012 mPa.s at room temperature.

7. Use of the aqueous solution according to any of claims 1 to 4 as a flame-retardant adhesive or binder for a building material which may be made of compressed lignocellulose fibers and/or animal fibers, in particular wool, in particular a building material selected from the group comprising: wood chips, wood fibers, wood pulp, flax fibers, cereal fibers, coconut fibers, sisal fibers, reed fibers, hemp fibers, palm fibers, or fiber mixtures, grass, cereals, cellulose, cellulose fibers, and recycled paper, or combinations, wherein the proportion of water glass lies in particular between 10 and 80 vol.%, preferably between 30 and 70 vol.%, and/or the proportion of the saponin preferably lies between 0.001 and 0.5 vol.%, in particular between 0.001 and 0.01 vol.%.

8. Use of the aqueous solution according to any of claims 1 to 4 as a preventive fire protection agent, in particular as a forest fire protection agent.

9. Use according to claim 8, **characterized in that** the aqueous solution is present as a sprayable or atomizable solution, wherein the sprayed or atomized solution preferably has droplets with an average diameter between 10 and 50 µm, in particular between 20 and 45 µm, preferably between 20 and 40 µm, and/or the proportion of water glass in the aqueous solution lies between 10 and 70 vol.%, preferably between 30 and 67 vol.%, and/or the aqueous solution has a viscosity between 1 and 3 mPa.s at room temperature.

10. Use of the aqueous solution according to any of claims 1 to 4 as a casting or sealing compound.

11. Use according to claim 10, **characterized in that** the casting or sealing compound is designed as a sprayable, pourable, or flowable compound, wherein, in particular, a flame-resistant or air-tight seal is provided against penetration into buildings, walls, or ceilings, and/or at least one further modifying agent is selected from the group comprising binders, in particular cellulose, natural or synthetic wax, preferably plant wax, mineral wax, stearin, or paraffin, natural or synthetic resin, natural or synthetic oil, natural or synthetic wax which is chemically modified, in particular saponified or emulsified in water, natural or synthetic resin which is chemically modified, in particular saponified or emulsified in water, natural or synthetic oil which is chemically modified, in particular saponified or emulsified in water; thickening agents, in particular talc, chalk, sawdust, sand, preferably fine sand or quartz sand, wherein, in particular, the proportion of the further modifying agent in the aqueous solution lies between 0 and 50 vol.%.

12. Building material having impregnation or wetting based on the aqueous solution according to any of claims 1 to 4, wherein the building material is selected from the group comprising: solid wood, natural fiberboard, in particular made of compressed wood fibers, flax fibers, cereal fibers, coconut fibers, sisal fibers, reed fibers, hemp fibers, palm fibers, fiber mixtures, or panels made of wool, wood wool panels, laminated wood, glued wood, MDF, HDF, OSB, particle board, plywood, veneer plywood, and/or the impregnation or wetting penetrates or is introduced into the surface of the building material or the substances or fibers which form the building material, wherein, in particular, the impregnation or wetting can be applied and/or introduced onto and/or into the surface by spraying, atomizing, spreading, or pressure impregnation.

13. Insulating material having impregnation or wetting based on the aqueous solution according to any of claims 1 to 4, wherein the insulating material is selected from the group comprising: lignocellulose-based insulating material, in particular wood, wood chips, or wood fibers, flax fibers, cereal fibers, coconut fibers, sisal fibers, reed fibers, hemp fibers, palm fibers, or fiber mixtures, grass, cereals, cellulose, cellulose fibers, and recycled paper, animal insulating material, in particular wool or combinations thereof, and/or the impregnation or wetting penetrates or is introduced into the surface of the insulating material and/or the substances or fibers which form the insulating material, and/or the impregnation or wetting can be applied and/or introduced onto and/or into the surface by spraying, atomizing, or pressure impregnation, wherein, in particular, the relative humidity of the impregnated insulating material corresponds to that of the non-impregnated insulating material.

14. Building material made of the aqueous solution according to any of claims 1 to 4 as a flame-retardant adhesive or binder containing lignocellulose fibers and/or animal fibers, in particular wool, wherein the lignocellulose fibers are selected from the group comprising: wood chips, wood fibers, wood pulp, flax fibers, cereal fibers, coconut fibers, sisal fibers, reed fibers, hemp fibers, palm fibers, or fiber mixtures, grass, cereals, cellulose, cellulose fibers, and recycled paper, or combinations, and/or the proportion of the adhesive or binder, based on the total mass of the building material, lies between 0.5 and 50%, in particular between 1 and 35%, preferably between 2 and 25%.

15. Building material having a paint made from the aqueous solution according to claims 1 to 4.

16. Building material according to claim 15, **characterized in that** the building material is selected from the group comprising: solid wood, wood boards, wood panels, wood sheets, wood veneers, wood beams, natural fiberboard, in particular made of compressed wood fibers, flax fibers, cereal fibers, coconut fibers, sisal fibers, reed fibers, hemp fibers, palm fibers, fiber mixtures, or panels made of wool, wood wool panels, laminated wood, laminated wood panels, glued wood, glued wood panels, glued boards, MDF, HDF, OSB, particle board, plywood, veneer plywood, veneer, veneer panels, and/or the paint is colorless or semi-transparent or contains a color pigment admixture, and/or the paint seals the surface of the building material in a watertight manner.

## Revendications

1. Solution aqueuse contenant:
du lactosérum, en particulier du lactosérum choisi dans le groupe constitué : du lactosérum doux et du lactosérum acide, ou de combinaisons de ceux-ci,
du verre soluble, en particulier choisi dans le groupe constitué du verre soluble au sodium et du verre soluble au potassium, ou des combinaisons de ceux-ci, le verre soluble étant de préférence du verre soluble au sodium, et de manière particulièrement préférée du verre soluble au sodium 37/40 Bé,
un solvant, en particulier un solvant contenant de l'eau,
**caractérisée par** au moins un modificateur, le modificateur étant choisi dans le groupe constitué : des saponines, en particulier les saponines dérivées de Sapindus mukorossi ou de Quillaja saponaria ; ou des combinaisons de celles-ci.

2. Solution aqueuse selon la revendication 1, **caractérisée par** au moins un autre modificateur choisi dans le groupe constitué des tensioactifs naturels et/ou synthétiques, de préférence les tensioactifs anioniques, cationiques et amphotères ; des tensioactifs à base de sucre ; des polyglycosides d'alkyle et/ou des savons.

3. Solution aqueuse selon la revendication 1 ou 2, **caractérisée en ce qu'au** moins un autre modificateur est prévu, l'autre modificateur étant en particulier choisi dans le groupe constitué : des saccharides, en particulier les mono-, di-, tri- ou polysaccharides, de préférence le saccharose, le lactulose, le maltose ou le tréhalose; des alditols; des acides carboxyliques et des sels et des esters de ceux-ci; des acides po-lyhydroxycarboxyliques et des sels et des esters de ceux-ci, en particulier des acides sacchariques; des esters de sucres; des liants, en particulier de la cellulose ; de la cire naturelle ou synthétique, de préférence la cire végétale, la cire minérale, la stéarine ou la paraffine, la résine naturelle ou synthétique, l'huile naturelle ou synthétique, la cire modifiée chimiquement, en particulier saponifiée ou émulsionnée dans l'eau, naturelle ou synthétique, la résine modifiée chimiquement, en particulier saponifiée ou émulsionnée dans l'eau, naturelle ou synthétique, l'huile modifiée chimiquement, en particulier saponifiée ou émulsionnée dans l'eau, naturelle ou synthétique ; de la bière ; de la caséine ; des épaississants, en particulier le talc, la craie, la sciure, le sable, de préférence le sable fin ou le sable de quartz ; des pigments ; du rodenticide, de l'insecticide ou du fongicide naturel ou synthétique.

4. Solution aqueuse selon la revendication 3, contenant :
entre 0,5 et 10 % en volume, en particulier entre 0,75 et 5 % en volume, de préférence entre 0,95 et 1,25 % en volume de l'au moins un saccharide, en particulier du lactose,
entre 0,1 et 5 % en volume, en particulier entre 0,25 et 3 % en volume, de préférence entre 0,5 et 1 % en volume de l'au moins un type de lactosérum, en particulier du lactosérum acide,
entre 0,001 et 0,5 % en volume, en particulier entre 0,001 et 0,1 % en volume, de préférence entre 0,002 et 0,05 % en volume de la saponine et
entre 10 et 85 % en volume, en particulier entre 45 et 75 % en volume, de préférence entre 50 et 70 % en volume de verre soluble,
de 0 à 50 % en volume de l'au moins un autre modificateur tel qu'indiqué dans la revendication 2.

5. Utilisation de la solution aqueuse selon l'une des revendications précédentes comme agent d'imprégnation ou de revêtement ignifuge pour un matériau de construction à base, en particulier, de lignocellulose, et choisi en particulier dans le groupe constitué : du bois massif, des panneaux de fibres naturelles, en particulier de fibres de bois, de fibres de lin, de fibres de céréales, de fibres de coco, de fibres de sisal, de fibres de roseau, de fibres de chanvre, de fibres de palmier, de mélanges de fibres pressé(e)s, ou des panneaux de laine, des panneaux de laine de bois, du bois laminé, du bois lamellé, du MDF, du HDF, de l'OSB, des panneaux de particules, du bois stratifié, du contreplaqué ; ou pour un matériau isolant, le matériau isolant étant en particulier choisi dans le groupe constitué : des matériaux isolants à base de lignocellulose, en particulier de bois, de panneaux de bois ou de fibres de bois, des fibres de lin, des fibres de céréales, des fibres de coco, des fibres de sisal, des fibres de roseau, des fibres de chanvre, des fibres de palmier ou des mélanges de fibres, d'herbe, de céréales, de cellulose, de fibres cellulosiques et de vieux papiers, des matériaux isolants d'origine animale, en particulier la laine, ou de combinaisons de ceux-ci ; la solution aqueuse se présentant de préférence sous forme de solution pulvérisable ou nébulisable, les gouttelettes de solution pulvérisée ou nébulisée présentant de préférence un diamètre moyen compris entre 10 et 50 µm, en particulier entre 20 et 45 µm, de préférence entre 20 et 40 µm et/ou la proportion de verre soluble dans la solution aqueuse étant comprise entre 10 et 70 % en volume, de préférence entre 30 et 67 % en volume, et/ou la solution aqueuse présentant, à température ambiante, une viscosité comprise entre 1 et 3 mPa.s.

6. Utilisation de la solution aqueuse selon l'une des revendications 1 à 4 en tant que solution d'application ignifuge et étalable pour un matériau de construction, en particulier un matériau de construction choisi dans le groupe constitué : du bois massif, des panneaux de fibres naturelles, en particulier de fibres de bois, de fibres de lin, de fibres de céréales, de fibres de coco, de fibres de sisal, de fibres de roseau, de fibres de chanvre, de fibres de palmier ou de mélanges de fibres pressé(e)s, ou des panneaux de laine, des panneaux de laine de bois, du bois laminé, du bois lamellé, du MDF, du HDF, de l'OSB, des panneaux de particules, du bois stratifié, du contreplaqué, au moins un autre modificateur étant choisi dans le groupe constitué : des liants, en particulier la cellulose, la cire naturelle ou synthétique, de préférence la cire végétale, la cire minérale, la stéarine ou la paraffine, la résine naturelle ou synthétique, l'huile naturelle ou synthétique, la cire modifiée chimiquement, en particulier saponifiée ou émulsionnée dans l'eau, naturelle ou synthétique, la résine modifiée chimiquement, en particulier saponifiée ou émulsionnée dans l'eau, naturelle ou synthétique, l'huile modifiée chimiquement, en particulier saponifiée ou émulsionnée dans l'eau, naturelle ou synthétique ; de la bière ; de la caséine ; des épaississants, en particulier le talc, la craie, la sciure, le sable, de préférence le sable fin ou de quartz, la proportion du modificateur dans la solution aqueuse étant de préférence comprise entre 0 et 50 % en volume et/ou la proportion de la saponine étant comprise entre 0,001 et 0,05 % en volume, en particulier entre 0,001 et 0,01 % en volume, la solution aqueuse présentant, à température ambiante, de préférence une viscosité comprise entre 2 et 1 014 mPa.s, en particulier entre 3 et 1 010 mPa.s, de préférence entre 4 et 1 012 mPa.s.

7. Utilisation de la solution aqueuse selon l'une des revendications 1 à 4 comme adhésif ou liant ignifuge pour un matériau de construction pouvant être formé à partir de fibres lignocellulosiques et/ou de fibres d'origine animale pressées, en particulier de laine, en particulier un matériau de construction choisi dans le groupe constitué : des copeaux de bois, des fibres de bois, de la pâte de bois, des fibres de lin, des fibres de céréales, des fibres de coco, des fibres de sisal, des fibres de roseau, des fibres de chanvre, des fibres de palmier ou des mélanges de fibres, de l'herbe, des céréales, de la cellulose, des fibres cellulosiques et des vieux papiers, ou des combinaisons de ceux-ci, la proportion de verre soluble étant en particulier comprise entre 10 et 80 % en volume, de préférence entre 30 et 70 % en volume et/ou la proportion de saponine étant comprise de préférence entre 0,001 et 0,05 % en volume, en particulier entre 0,001 et 0,01 % en volume.

8. Utilisation de la solution aqueuse selon l'une des revendications 1 à 4 comme produit ignifuge préventif, en particulier comme produit ignifuge de forêt.

9. Utilisation selon la revendication 8, **caractérisée en ce que** la solution aqueuse est présente sous forme de solution pulvérisable ou nébulisable, les gouttelettes de solution pulvérisée ou nébulisée présentant de préférence un diamètre moyen compris entre 10 et 50 µm, en particulier entre 20 et 45 µm, de préférence entre 20 et 40 µm et/ou la proportion de verre soluble dans la solution aqueuse étant comprise entre 10 et 70 % en volume, de préférence entre 30 et 67 % en volume, et/ou la solution aqueuse présentant, à température ambiante, une viscosité comprise entre 1 et 3 mPa.s.

10. Utilisation de la solution aqueuse selon l'une des revendications 1 à 4 comme composé d'enrobage ou de scellement.

11. Utilisation selon la revendication 10, **caractérisée en ce que** le composé d'enrobage ou de scellement est formé sous forme de composé pulvérisable, versable ou coulable, une étanchéité au feu ou à l'air des imprégnations de bâtiments, de murs ou de plafonds étant en particulier prévue et/ou au moins un autre modificateur étant choisi dans le groupe constitué des liants, en particulier la cellulose, la cire naturelle ou synthétique, de préférence la cire végétale, la cire minérale, la stéarine ou la paraffine, la résine naturelle ou synthétique, l'huile naturelle ou synthétique, la cire modifiée chimiquement, en particulier saponifiée ou émulsionnée dans l'eau, naturelle ou synthétique, la résine modifiée chimiquement, en particulier saponifiée ou émulsionnée dans l'eau, naturelle ou synthétique, l'huile fortifiée chimiquement, en particulier saponifiée ou émulsionnée dans l'eau, l'huile naturelle ou synthétique ; des épaississants, en particulier le talc, la craie, la sciure, le sable, de préférence le sable fin ou le sable de quartz, la proportion de l'autre modificateur dans la solution aqueuse étant en particulier comprise entre 0 et 50 % en volume.

12. Matériau de construction comportant une imprégnation ou un mouillage à base de solution aqueuse selon l'une des revendications 1 à 4, le matériau de construction étant choisi dans le groupe constitué : du bois massif, des panneaux de fibres naturelles, en particulier de fibres de bois, de fibres de lin, de fibres de céréales, de fibres de coco, de fibres de sisal, de fibres de roseau, de fibres de chanvre, de fibres de palmier ou de mélanges de fibres pressé(e)s, ou des panneaux de laine, des panneaux de laine de bois, du bois laminé, du bois lamellé, du MDF, du HDF, de l'OSB, des panneaux de particules, du bois stratifié, du contreplaqué, et/ou l'imprégnation ou le mouillage dans la surface du matériau de construction ou de la matière ou des fibres formant le matériau de construction étant infiltré(e) ou introduit(e), l'imprégnation ou le mouillage pouvant en particulier être appliqué(e) et/ou introduit(e) par pulvérisation, nébulisation, étalage ou imprégnation sous pression sur et/ou dans la surface.

13. Matériau isolant comportant une imprégnation ou un mouillage à base de solution aqueuse selon l'une des revendications 1 à 4, le matériau isolant étant choisi dans le groupe constitué : des matériaux isolants à base de lignocellulose, en particulier de bois, de panneaux de bois ou de fibres de bois, de fibres de lin, de fibres de céréales, de fibres de coco, de fibres de sisal, de fibres de roseau, de fibres de chanvre, de fibres de palmier ou de mélanges de fibres, de l'herbe, des céréales, des cellulose, des fibres cellulosiques et des vieux papiers, des matériaux isolants d'origine animale, en particulier la laine, ou des combinaisons de ceux-ci, et/ou l'imprégnation ou le mouillage dans la surface du matériau isolant et/ou la matière ou les fibres formant le matériau isolant étant infiltré(e) ou introduit(e), et/ou l'imprégnation ou le mouillage pouvant être appliqué(e) et/ou introduit(e) par pulvérisation, nébulisation ou imprégnation sous pression sur et/ou dans la surface, l'humidité relative du matériau isolant imprégné correspondant en particulier à celle du matériau isolant non imprégné.

14. Matériau de construction formé à partir de la solution aqueuse selon l'une des revendications 1 à 4 comme fibres lignocellulosiques et/ou fibres d'origine animale, en particulier de laine, présentant un adhésif ou un liant ignifuge , les fibres lignocellulosiques étant choisies dans le groupe constitué : des copeaux de bois, des fibres de bois, de la pâte de bois, des fibres de lin, des fibres de céréales, des fibres de coco, des fibres de sisal, des fibres de roseau, des fibres de chanvre, des fibres de palmier ou des mélanges de fibres, de l'herbe, des céréales, de la cellulose, des fibres cellulosiques et des vieux papiers, ou des combinaisons de ceux-ci, et/ou la proportion d'adhésif ou de liant, par rapport au poids total du matériau de construction, étant comprise entre 0,5 et 50 %, en particulier entre 1 et 35 %, et de préférence entre 2 et 25 %.

15. Matériau de construction comportant une peinture formée à partir de la solution aqueuse selon les revendications 1 à 4.

16. Matériau de construction selon la revendication 15, **caractérisé en ce que** le matériau de construction est choisi dans le groupe constitué : du bois massif, des planches de bois, des panneaux de bois, des habillages en bois, des revêtements en bois, des poutres en bois, des panneaux de fibres naturelles, en particulier de fibres de bois, de fibres de lin, de fibres de céréales, de fibres de coco, de fibres de sisal, de fibres de roseau, de fibres de chanvre, de fibres de palmier ou de mélanges de fibres pressé(e)s, ou des panneaux de laine, des panneaux de laine de bois, du bois laminé, des panneaux de bois laminé, du bois lamellé, des panneaux de bois lamellé, du bois lamellé, du MDF, du HDF, de l'OSB, des panneaux de particules, du bois stratifié, du contreplaqué, du placage, des panneaux de placage, et/ou la peinture est incolore ou semi-transparente ou comporte un mélange de pigments de couleur et/ou la peinture étanchéifie la surface du matériau de construction.
